(19) Europäisches Patentamt
European Patent Office
Office européen des brevets

(11) **EP 1 233 535 A1**

(12) **EUROPEAN PATENT APPLICATION**
published in accordance with Art. 158(3) EPC

(43) Date of publication:
**21.08.2002 Bulletin 2002/34**

(51) Int Cl.⁷: **H04B 1/707**

(21) Application number: **01961299.3**

(86) International application number:
**PCT/JP01/07586**

(22) Date of filing: **03.09.2001**

(87) International publication number:
**WO 02/021713 (14.03.2002 Gazette 2002/11)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.09.2000 JP 2000267532**
**21.02.2001 JP 2001045710**

(71) Applicant: **MATSUSHITA ELECTRIC INDUSTRIAL CO., LTD.**
**Kadoma-shi, Osaka 571-8501 (JP)**

(72) Inventors:
• **KANEMOTO, Hideki**
  **Yokosuka-shi, Kanagawa 239-0847 (JP)**
• **HAYASHI, Toshiteru**
  **Yokosuka-shi, Kanagawa 239-0841 (JP)**
• **MIYA, Kazuyuki**
  **Asao-ku, Kawasaki-shi, Kanagawa 215-0021 (JP)**

(74) Representative: **Grünecker, Kinkeldey, Stockmair & Schwanhäusser Anwaltssozietät**
**Maximilianstrasse 58**
**80538 München (DE)**

(54) **PHASE ROTATION MEASURING DEVICE AND RADIO BASE STATION DEVICE HAVING THE SAME**

(57)    A quadrantal compensation circuit 2051 performs quadrantal compensation on a despread signal. A between-symbol averaging circuit 2052 averages in-phase addition results over a period in which differential detection is performed. A differential detection circuit 2053 performs differential detection using averaged in-phase addition results. A between-finger averaging circuit 2057 averages differential detection output averaged between fingers. A normalization circuit 2058 normalizes differential detection output averaged between fingers. A multiplier 2060 multiplies differential detection output from the differential detection circuit 2053 by the complex conjugate of normalized differential detection output. An absolute value calculation circuit 2055 performs absolute value calculation for differential detection output after it has undergone frequency offset compensation. A between-finger averaging circuit 2059 averages differential detection output averaged between fingers.

FIG.3

**Description**

Technical Field

The present invention relates to a phase rotation detection apparatus and a radio base station apparatus provided therewith used in a digital radio communication system, and more particularly in a CDMA (Code Division Multiple Access) system.

Background Art

In radio communications, a base station and a communication terminal have independent clocks. Generally, a base station has a high-precision (0.1 ppm or less) oscillator, while a communication terminal has an oscillator with a precision on the order of several ppm for reasons of cost, size, and power consumption.

When the carrier frequency is 2 GHz, for example, a frequency difference of 2 kHz (in the case of a precision of 1 ppm) or more occurs in a communication terminal, and reception is difficult if this situation is not rectified. Therefore, a communication terminal normally has a function, AFC (Automatic Frequency Control), that controls clock frequency difference based on a downlink received signal.

In the case of digital radio communication system W-CDMA (Wideband-Code Division Multiple Access), precision of 0.1 ppm (equivalent to 200 Hz at a 2 GHz carrier frequency) or less is required according to a 3GPP (3rd Generation Partnership Project) specification.

However, even when such a specification is met, estimation deteriorates greatly in uplink signal reception by a base station channel because of phase rotation due to communication terminal frequency offset (frequency difference of a received signal that occurs because of compensation error (AFC residual error) in AFC that compensates for communication terminal clock frequency difference, or the like, of about 48 degrees within a slot with a 200 Hz frequency offset, for example) and a high maximum Doppler frequency (fD) caused by fading fluctuations (for example, phase rotation of about 57.6 degrees in one slot at 240 Hz (equivalent to a speed of about 120 km/h)), and as a result, reception characteristics deteriorate significantly.

With a method that weights and averages pilot symbols of a plurality of slots with the aim of improving the precision of channel estimation (WMSA: Weighted Multi-Symbol Averaging), in particular, the longer the averaging time for obtaining channel estimation, the greater is the influence. Conventionally, therefore, controlling the averaging length (slot length and its weight coefficient according to fD has been considered. For example, control is performed so that, as phase rotation increases due to frequency offset or fading fluctuations, the averaging time is shortened (the number of slots before and after performing averaging is reduced) to prevent influence thereby.

Heretofore, "A Frequency Offset Compensation Method in a DC-CDMA Receiver" has been disclosed in the 1999 IEICE General Meeting B5-123 (Mitsubishi Electric Corporation: Nagayasu et al) as a method of detecting phase rotation for channel estimation. This method performs only frequency offset detection by performing between-slot channel estimate differential detection, calculating phase rotation angles, and averaging the calculated phase rotation angles using an IIR (Infinite Impulse Response) filter.

As this method uses an inverse tangent function (tan-1) in calculating phase rotation angles, the amount of computation is large and this greatly affects the scale of the hardware.

Also, with this method only the phase rotation angle is considered in phase rotation detection, and averaging of phase rotation angles is used for phase rotation detection. In this case, the reliability of individual detected phase rotation angles is not taken into consideration. To be specific, with this method, phase rotation detection is performed simply by using a value obtained by averaging phase rotation angles, and the reliability of the channel estimate in m slots (estimated transmission characteristic)-that is, the received signal level in those slots-and the amplitude of the differential detection output dependent thereon, are not taken into consideration.

Generally, if the desired signal level (SIR (Signal to Interference Ratio)) is low, the influence of noise on a received signal is great, and the reliability of a channel estimate is low. Also, the amplitude of differential detection output depends on the size of slot channel estimates before and after performing a complex conjugate operation. Thus, with this method, in spite of the dependency on the amplitude of differential detection output, the reliability of detected angles in differential detection output is not taken into consideration at all. When phase rotation detection is carried out under such conditions, the precision of phase rotation detection falls, and so does channel estimation precision.

Moreover, the channel estimate interval used for differential detection is fixed at one slot.

Also, "Doppler Frequency Detection Using Pilot Symbols" was disclosed in the 2000 IEICE General Meeting B5-123 (Docomo: Ando et al) as another method of detecting phase rotation for channel estimation. This method detects a maximum Doppler frequency by normalizing channel estimates for each slot and then performing inner product operations and averaging.

With this method, only the maximum Doppler frequency is considered in phase rotation detection, and the influence of frequency offset is not taken into consideration. Also, as with the above-described conventional technology, since inner product operations are performed after normalizing channel estimates, the reliability of the channel estimates is not taken into consideration. When phase rotation detection is carried out under such conditions , the precision of phase rotation detection falls, and so does channel estimation precision.

Disclosure of Invention

It is an object of the present invention to provide a phase rotation detection apparatus that enables a maximum Doppler frequency due to a carrier frequency offset or fading fluctuations to be detected with high precision, and a radio base station apparatus provided therewith.

The present inventors arrived at the present invention by noting that phase rotation for which compensation is necessary when channel estimation is performed is related to frequency offset that varies in a comparatively long time order according to the external environmental factors such as compensation error (AFC residual error) in AFC that compensates for communication terminal clock frequency difference, and fading fluctuations that vary at a frequency on the order of several milliseconds, and finding that it is possible to improve channel estimation precision by detecting separately the frequency offset component and fading fluctuation component of phase rotation, and moreover taking the reliability of the frequency offset component and fading fluctuation component into consideration, and reflecting detected phase rotation values in channel estimation.

The subject of the present invention is realizing high detection precision by taking into consideration the reliability of a received signal by performing vector combining of differential detection output when separately detecting the frequency offset component and fading fluctuation component of phase rotation from a known signal included in the received signal, and detecting the maximum Doppler frequency using differential detection output after frequency offset compensation has been performed.

Brief Description of Drawings

FIG.1 is a block diagram showing the configuration of a base station provided with a phase rotation detection apparatus according to Embodiment 1 of the present invention;
FIG.2 is a block diagram showing the configuration of the channel estimation circuits of the base station shown in FIG.1;
FIG.3 is a block diagram showing the configuration of the phase rotation detection circuit in the channel estimation circuit shown in FIG.2;
FIG.4 is a block diagram showing the configuration of a communication terminal that performs radio communication with a base station provided with a phase rotation detection apparatus according to Embodiment 1 of the present invention;
FIG.5 is a drawing for explaining a differential detection time interval in a phase rotation detection apparatus of the present invention;
FIG.6 is a block diagram showing a configuration of the differential detection circuit of a phase rotation detection apparatus according to Embodiment 2 of the present invention;
FIG.7 is a drawing showing a table used in the differential detection circuit of a phase rotation detection apparatus according to Embodiment 2 of the present invention;
FIG.8 is a block diagram showing another configuration of the differential detection circuit of a phase rotation detection apparatus according to Embodiment 2 of the present invention;
FIG.9 is a block diagram showing the configuration of a phase rotation detection circuit according to Embodiment 3 of the present invention;
FIG.10 is a block diagram showing the configuration of a phase rotation detection circuit according to Embodiment 4 of the present invention;
FIG.11 is a block diagram showing the configuration of a phase rotation detection circuit according to Embodiment 5 of the present invention;
FIG.12 is a block diagram showing the configuration of a phase rotation detection circuit according to Embodiment 6 of the present invention;
FIG.13 is a block diagram showing the configuration of a phase rotation detection circuit according to Embodiment 7 of the present invention;
FIG.14 is a drawing showing an fD determination table used in a phase rotation detection apparatus according to Embodiment 7 of the present invention;
FIG.15 is a block diagram showing the configuration of a base station provided with a phase rotation detection apparatus according to Embodiment 8 of the present invention;

FIG.16 is a block diagram showing the configuration of a phase rotation detection circuit according to Embodiment 8 of the present invention;

FIG.17 is a block diagram showing the configuration of a base station provided with a phase rotation detection apparatus according to Embodiment 9 of the present invention;

FIG.18 is a block diagram showing the configuration of a phase rotation detection circuit according to Embodiment 9 of the present invention;

FIG.19 is a block diagram showing the configuration of a base station provided with a phase rotation detection apparatus according to Embodiment 10 of the present invention;

FIG.20 is a block diagram showing the configuration of a phase rotation detection circuit according to Embodiment 10 of the present invention;

FIG.21 is a drawing showing a detection timing change of phase rotation detection according to Embodiment 10 of the present invention;

FIG.22 is a drawing showing a detection timing change of phase rotation detection according to Embodiment 10 of the present invention;

FIG.23 is a block diagram showing an example of the configuration of a phase rotation detection circuit according to Embodiment 11 of the present invention;

FIG.24 is a flowchart for explaining switching control of phase rotation detection according to Embodiment 11 of the present invention; and

FIG.25 is a block diagram showing another example of the configuration of a phase rotation detection circuit according to Embodiment 11 of the present invention.

Best Mode for Carrying out the Invention

With reference now to the accompanying drawings, embodiments of the present invention will be explained in detail below.

(Embodiment 1)

In this embodiment, a case is described where, when performing channel estimation, phase rotation due to frequency offset and phase rotation due to fading fluctuations are calculated separately, and both phase rotations are compensated for.

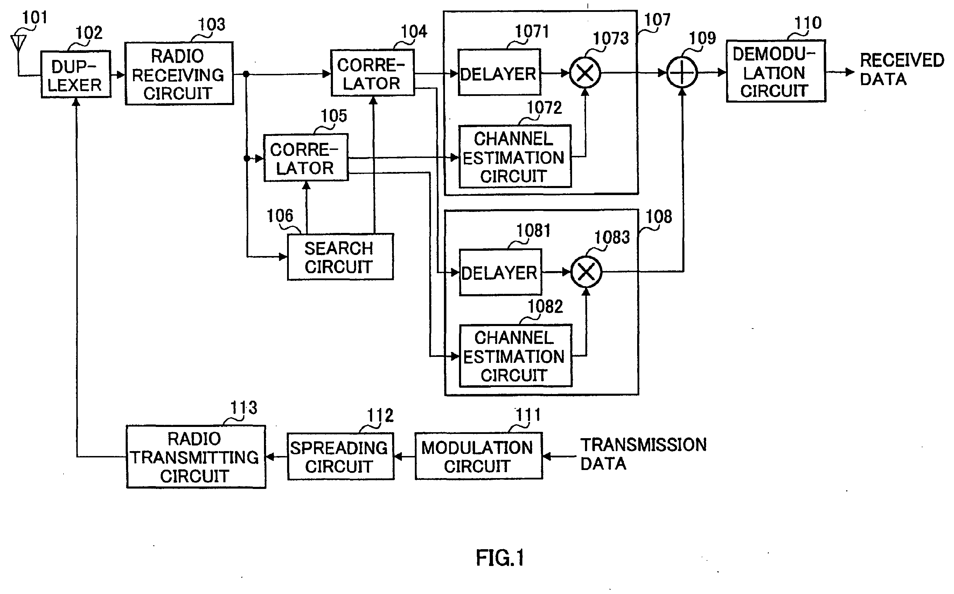

FIG.1 is a block diagram showing the configuration of a base station provided with a phase rotation detection apparatus according to Embodiment 1 of the present invention. With the base station shown in FIG.1, a case is described where the number of RAKE-combined paths is two, but this embodiment can also be applied to cases where the number of RAKE-combined paths is three or more. Also, in the base station shown in FIG.1, notation is given for only a single-user system in order to simplify the explanation, but this embodiment can also be applied in a similar way for a multi-user system.

A signal transmitted from a communication terminal that is the communicating party is received by a radio receiving circuit 103 from an antenna 101 via a duplexer 102. In the radio receiving circuit 103, predetermined radio reception processing (down-conversion, A/D conversion, etc.) is performed on the received signal, and the signal that has undergone radio reception processing is output to correlators 104 and 105. In addition, the signal that has undergone radio reception processing is also output to a search circuit 106.

In correlator 104, the data part (DPDCH (Dedicated Physical Data Channel)) of the signal that has undergone radio reception processing undergoes despreading processing using the spreading code used in spreading modulation processing in the communication terminal that is the communicating party, and the resulting signal is output to a delayer 1071 of a coherent detection circuit 107 and a delayer 1081 of a coherent detection circuit 108. In correlator 105, the pilot part (a known signal) of the signal that has undergone radio reception processing undergoes despreading processing using the spreading code used in spreading modulation processing in the communication terminal that is the communicating party, and the resulting signal is output to a channel estimation circuit 1072 of coherent detection circuit 107 and a channel estimation circuit 1082 of coherent detection circuit 108. The search circuit 106 acquires synchronization of the paths on which despreading processing is performed, and outputs the relevant timing information to correlator 104 and correlator 105. Correlator 104 and correlator 105 perform despreading processing based on the timing information from the search circuit 106.

In the channel estimation circuit 1072 of coherent detection circuit 107, channel estimation is performed using the pilot part of the received signal, and the channel estimate is output to a multiplier 1073. In the multiplier 1073, the data part of the received signal that has undergone timing compensation by delayer 1071 is multiplied by the channel estimate. By this means, coherent detection is performed. The signal after coherent detection is output to a RAKE combiner 109.

In the channel estimation circuit 1082 of coherent detection circuit 108, channel estimation is performed using the pilot part of the received signal, and the channel estimate is output to a multiplier 1083. In the multiplier 1083, the data part of the received signal that has undergone timing compensation by delayer 1081 is multiplied by the channel estimate. By this means, coherent detection is performed. The signal after coherent detection is output to the RAKE combiner 109.

In the RAKE combiner 109, the outputs from coherent detection circuit 107 and coherent detection circuit 108 are RAKE-combined, and the RAKE-combined signal is output to a demodulation circuit 110. In the demodulation circuit 110, demodulation processing is performed on the RAKE-combined signal, and receive data is obtained.

Transmit data undergoes modulation processing by a modulation circuit 111, and is output to a spreading circuit 112. In the spreading circuit 112, spreading modulation processing is performed, using a predetermined spreading code, on the data that has undergone modulation processing, and the data that has undergone spreading modulation processing is output to a radio transmitting circuit 113. In the radio transmitting circuit 113, predetermined radio transmission processing (D/A conversion, up-conversion) is performed on the data that has undergone spreading modulation processing. The signal that has undergone radio transmission processing is transmitted to the communication terminal that is the communicating party from the antenna 101 via the duplexer 102.

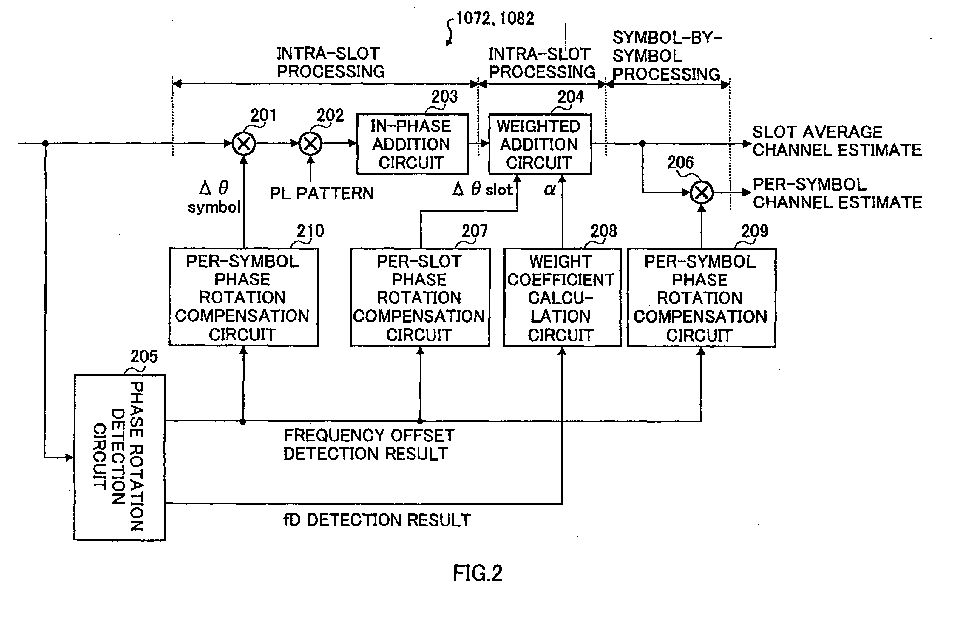

Next, the configuration of channel estimation circuits 1072 and 1082 in coherent detection circuits 107 and 108 will be described. FIG.2 is a block diagram showing the configuration of the channel estimation circuits of the base station shown in FIG.1.

A multiplier 201 multiplies a signal that has undergone despreading processing by a per-symbol phase rotation compensation value, and outputs the resulting signal to a multiplier 202. Multiplier'202 multiplies the despreading-processed signal that has undergone per-symbol phase rotation compensation by a pilot pattern (PL pattern), performs in-phase arrangement by deleting data modulation components in accordance with the PL pattern, and outputs the multiplication results to an in-phase addition circuit 203.

The in-phase addition circuit 203 performs in-phase addition of the multiplication results and obtains a per-slot channel estimate. Per-symbol phase rotation compensation value multiplication, PL pattern multiplication, and in-phase addition are intra-slot processing. This channel estimate is output to a weighted addition circuit 204.

Meanwhile, the signal that has undergone despreading processing is output to a phase rotation detection circuit 205. The phase rotation detection circuit 205 obtains the frequency offset from the despreading-processed signal, and also obtains the maximum Doppler frequency (hereinafter referred to as "Doppler frequency" or "fD") from the despreading-processed signal. The phase rotation detection circuit 205 detects the frequency offset and maximum Doppler frequency separately.

The frequency offset detection result (phase rotation amount corresponding to frequency offset) detected by the phase rotation detection circuit 205 is output to a per-slot phase rotation compensation circuit 207 and per-symbol phase rotation compensation circuits 209 and 210. The maximum Doppler frequency (phase rotation amount corresponding to fD) is output to a weight coefficient calculation circuit 208.

Generally, it is difficult to measure accurately the Doppler frequency in fading fluctuations, compared with frequency offset. Therefore, in the above-mentioned Doppler frequency detection, precision can be expected to be rougher than the detection precision for frequency offset ( for example, on the order of several tens of Hz, or of a low-speed/medium-speed/high-speed level of detection).

Per-symbol phase rotation compensation circuit 210 calculates a per-symbol phase rotation compensation value ..symbol based on the frequency offset phase rotation amount, and outputs this phase rotation compensation value ..symbol to multiplier 201. The per-slot phase rotation compensation circuit 207 calculates a per-slot phase rotation compensation value ..slot based on the frequency offset phase rotation amount, and outputs this phase rotation compensation value ..slot to the weighted addition circuit 204. Per-symbol phase rotation compensation circuit 209 calculates a per-symbol phase rotation compensation value ..symbol based on the frequency offset component, and outputs this phase rotation compensation value ..symbol to a multiplier 206. As above-mentioned phase rotation compensation value ..symbol output to multiplier 201 and phase rotation compensation value ..symbol output to multiplier 206 are the same value, it is also possible to make them a single common value.

The weight coefficient calculation circuit 208 calculates a weight coefficient (.) corresponding to the fD detection value, and outputs this weight coefficient

. to the weighted addition circuit 204.

In the weighted addition circuit 204, weighted addition is performed on per-slot channel estimates spanning a plurality of slots, using phase rotation compensation value ..slot from the per-slot phase rotation compensation circuit 207 and weight coefficient

. from the weight coefficient calculation circuit 208. Thus, this weighted addition processing is inter-slot processing.

In this way, a per-symbol channel estimate or slot average channel estimate is calculated by means of channel estimates subjected to weighted addition for a plurality of slots. In this case, a slot average channel estimate which is output from the weighted addition circuit 204, or a per-symbol channel estimate obtained by multiplying a slot average channel estimate which is output from the weighted addition circuit 204 by per-symbol phase rotation compensation value ..symbol, is used as the channel estimate as necessary.

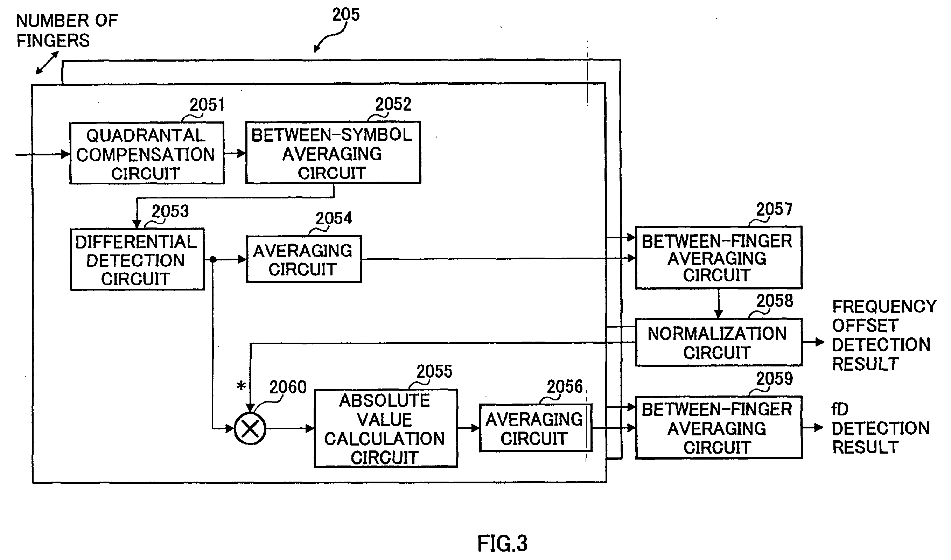

Next, the phase rotation detection circuit 205 will be described using FIG.3. This phase rotation detection circuit 205 obtains phase rotation due to the frequency offset component (frequency offset detection result) and phase rotation due to the maximum Doppler frequency component (fD detection result) separately, taking received signal reliability into consideration. That is to say, the received signal level in a slot and the amplitude of the differential detection output dependent thereon are taken into consideration in frequency offset detection and maximum Doppler frequency detection.

By obtaining the frequency offset component and maximum Doppler frequency component separately in this way in phase rotation detection, it is possible to compensate individually for various different factors affecting phase rotation. Also, by considering reliability, such as the received signal level in a slot and the amplitude of the differential detection output dependent thereon, in the detection of phase rotation due to the frequency offset component and the maximum Doppler frequency component, it is possible to perform accurate phase rotation compensation. As a result, it is possible to perform high-precision channel estimation, and to improve reception characteristics in a base station.

In FIG.3, a signal that has undergone despreading processing (despread signal) from correlator 104 or 105 is output to a quadrantal compensation circuit 2051. The quadrantal compensation circuit 2051 performs quadrantal compensation on the despread signal. That is to say, it enables signal point quadrants to be arranged and in-phase addition to be performed. The quadrantal-compensated signal is output to a between-symbol averaging circuit 2052.

The between-symbol averaging circuit 2052 averages in-phase addition results over the interval (between symbols) in which differential detection is performed. The averaged in-phase addition result is output to a differential detection circuit 2053.

The differential detection circuit 2053 performs differential detection using the averaged in-phase addition result. This differential detection output is sent to an averaging circuit 2054 and a multiplier 2060. In the averaging circuit 2054, averaging (vector combining) is performed directly on differential detection output over several tens of frames, for example, in order to increase the precision of the differential detection output. The averaged differential detection output is output to a between-finger averaging circuit 2057.

The between-finger averaging circuit 2057 averages differential detection output averaged between fingers. This differential detection output averaged between fingers is output to a normalization circuit 2058.

In the normalization circuit 2058, differential detection output averaged between fingers is normalized. This is because it is necessary for differential detection output averaged between fingers to be made information concerning only an angle when used in maximum Doppler frequency detection. Normalized differential detection output is output to the multiplier 2060, and is also obtained as the frequency offset detection result.

In FIG.3, a case is described where the frequency offset detection result is output from the normalization circuit 2058, but output from the between-finger averaging circuit 2057 may also be used as the frequency offset detection result.

In the multiplier 2060, the differential detection output from the differential detection circuit 2053 and the complex conjugate of the normalized differential detection output are multiplied. By this means, differential detection output that has undergone frequency offset compensation is obtained. This frequency offset compensated differential detection output is output to an absolute value calculation circuit 2055.

The absolute value calculation circuit 2055 performs an absolute value calculation on the frequency offset compensated differential detection output. The reason for this is that the direction of phase rotation due to a Doppler frequency is not uniform, and fD cannot be detected correctly if averaging is performed directly. Differential detection output that has undergone absolute value calculation is output to an averaging circuit 2056.

In averaging circuit 2056, averaging (vector combining) is performed directly on differential detection output over several tens of frames, for example, in order to increase the precision of the differential detection output. The averaged differential detection output is output to a between-finger averaging circuit 2059.

Between-finger averaging circuit 2059 averages differential detection output averaged between fingers. This differential detection output averaged between fingers is the fD detection result.

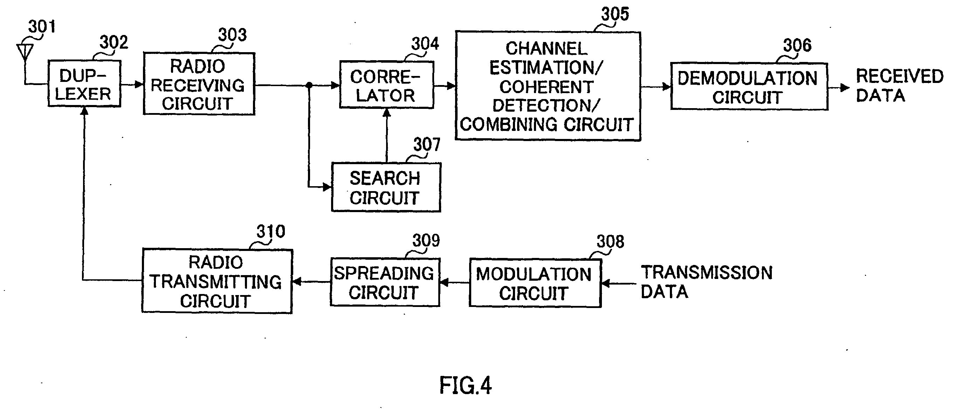

The base station shown in FIG.1 as described above forms a CDMA digital radio system together with a communication terminal as shown in FIG.4, with radio communications performed by the base station shown in FIG. 1 and the communication terminal shown in FIG.4. This communication terminal will now be described using FIG.4.

FIG.4 is a block diagram showing the configuration of a communication terminal that performs radio communication with a base station provided with a phase rotation detection apparatus according to Embodiment 1 of the present invention. With the communication terminal shown in FIG.4, a case is described where the number of RAKE-combined paths is one, but this embodiment can also be applied to cases where the number of RAKE-combined paths is two or more.

A signal transmitted from a base station that is the communicating party is received by a radio receiving circuit 303 from an antenna 301 via a duplexer 302. In the radio receiving circuit 303, predetermined radio reception processing is performed on the received signal, and the signal that has undergone radio reception processing is output to a correlator 304 and a search circuit 307.

In the correlator 304, the signal that has undergone radio reception processing undergoes despreading processing using the spreading code used in spreading modulation processing in the base station that is the communicating party, and the resulting signal is output to a channel estimation/coherent detection/combining circuit 305. The correlator 304 performs despreading processing based on timing information output from the search circuit 307. The channel estimation/coherent detection/combining circuit 305 performs channel estimation using the pilot part (a known signal) of the signal that has undergone radio reception processing, and obtains a channel estimate, and performs coherent detection by multiplying this channel estimate by the data part of the signal that has undergone radio reception processing. In addition, the channel estimation/coherent detection/combining circuit 305 performs RAKE combining using the signal after coherent detection.

The RAKE-combined signal is output to a demodulation circuit 306. In the demodulation circuit 306, demodulation processing is performed on the RAKE-combined signal, and receive data is obtained.

Transmit data undergoes modulation processing by a modulation circuit 308, and is output to a spreading circuit 309. In the spreading circuit 309, spreading modulation processing is performed, using a predetermined spreading code, on the data that has undergone modulation processing, and the data that has undergone spreading modulation processing is output to a radio transmitting circuit 310. In the radio transmitting circuit 310, predetermined radio transmission processing is performed on the data that has undergone spreading modulation processing. The signal that has undergone radio transmission processing is transmitted to the base station that is the communicating party from the antenna 301 via the duplexer 302.

Next, the actual operation of a phase rotation detection apparatus that has the above configuration will be described.

In a base station, an uplink signal is received from a communication terminal, and despreading processing is performed on the received signal by a correlator. The despread signal is output to the phase rotation detection circuit 205. In the phase rotation detection circuit 205, frequency offset and fD are detected separately.

First, the method of detecting frequency offset will be described.

In the present invention, unlike conventional phase rotation detection, detected angles of rotation are not averaged, but differential detection outputs (detection vectors) are added (combined). This is in order to add differential detection outputs directly, since detection of phase rotation due to frequency offset is dependent on differential detection output, as described above. As frequency offset is detected with differential detection output reliability taken into consideration in this way, it is possible to achieve a high level of detection precision. Also, in this case, the hardware scale can be reduced since an inverse tangent function is not used for angle calculation as in a conventional system.

Next, the method of detecting the maximum Doppler frequency (fD) will be described.

In the present invention, the maximum Doppler frequency is detected using differential detection output values. To be specific, inner products are not used in phase rotation detection, but differential detection outputs (I and Q outputs) during the measurement period are added (subjected to vector combining) directly. For the quadrature component (Q component), absolute values are added.

With this method, the fact that the reliability of a detected angle in differential detection output depends on the amplitude of the differential detection output is taken into consideration, and differential detection outputs are added directly. By this means it is possible to achieve a high level of detection precision. Also, in this case, the hardware scale can be reduced since an inverse tangent function is not used for angle calculation as in a conventional system.

In frequency offset detection and maximum Doppler frequency detection, the measurement period (number of times of averaging) can be made variable. For example, this can be controlled according to the reception SIR (Signal to Interference Ratio) or speed of movement. Also, in cases where communication must be initiated with a short detection time even if precision deteriorates to some extent, such as when starting communication, for example, the measurement period will be made shorter than usual. In this way, the measurement period may be controlled in accordance with the operating conditions. This will be further explained later herein.

Next, maximum Doppler frequency detection combined with frequency offset detection will be described.

In the present invention, the maximum Doppler frequency is detected after frequency offset compensation has been performed as described above for differential detection output values. Frequency offset compensation is performed by first normalizing a frequency offset detected value (averaged differential detection output), and then multiplying the complex conjugate of the result by the differential detection output.

Then frequency offset compensated differential detection outputs are added over the measurement period. For the quadrature component (Q component), absolute values are added. Furthermore, these values are averaged (combined) between fingers. The value averaged between fingers is normalized, and the value of the quadrature component is calculated, giving the detected value. Finally, that detected value is compared with determination data (a determination table), fD determination is performed, and the fD detection result is obtained.

Actual computations in maximum Doppler frequency detection combined with frequency offset detection will now be described.

Regarding finger 1, if the mth output of the average of pilot symbols after quadrantal compensation-that is, the mth in-phase addition result of finger 1-is designated h1,m, the corresponding differential detection output in a predetermined interval is as shown in Equation (1).

$$d_{l,m} = h_{l,m} \cdot \overset{\bullet}{h}_{l,m-1} \qquad \text{Equation (1)}$$

Since signal rotation due to frequency offset can be considered to be almost uniform, the influence of noise can be reduced by performing vector addition of the differential detection outputs for only a predetermined interval and finding the average, as shown in Equation (2) below.

$$d_l = \sum_m h_{l,m} \cdot \overset{\bullet}{h}_{l,m-1} \qquad \text{... Equation (2)}$$

The averages of above-described differential detection outputs obtained for each finger are averaged by further performing vector addition on a finger-by-finger basis, as shown in Equation (3).

$$\bar{d} = \sum_{finger} \sum_m h_{l,m} \cdot \overset{\bullet}{h}_{l,m-1} \qquad \text{... Equation (3)}$$

A positive/negative Doppler shift due to fading is compensated for in the obtained differential detection output average, and the rotation component due to frequency offset is included.

Next, phase rotation due to frequency offset obtained as described above is eliminated from the differential detection output, and the Doppler shift component due to fading is detected. First, as shown in Equation (4) below, the differential detection output average is normalized, and only the rotation component is extracted.

$$\bar{d}_{normalized} = \frac{\sum_{finger} \sum_m h_{l,m} \cdot \overset{\bullet}{h}_{l,m-1}}{\left| \sum_{finger} \sum_m h_{l,m} \cdot \overset{\bullet}{h}_{l,m-1} \right|} \qquad \text{... Equation (4)}$$

As shown in Equation (5), differential detection output is multiplied by the complex conjugate of rotation due to frequency offset obtained by Equation (4), and the rotation component due to frequency offset is compensated for.

$$p_{l,m} = d_{l,m} \cdot \bar{d}_{normalized}{}^{\bullet}$$

$$= h_{l,m} \cdot \overset{\bullet}{h}_{l,m-1} \cdot \left( \frac{\sum_{finger} \sum_m h_{l,m} \cdot \overset{\bullet}{h}_{l,m-1}}{\left| \sum_{finger} \sum_m h_{l,m} \cdot \overset{\bullet}{h}_{l,m-1} \right|} \right)^{\bullet} \qquad \text{... Equation (5)}$$

Fading Doppler frequency detection is performed from differential detection output on which frequency offset compensation has been carried out. With fading, both positive and negative phase rotation occurs, and so simply calculating a vector average is not sufficient. Therefore, as shown in Equation (6) below, an absolute value is taken for the Q component of obtained differential detection output after frequency offset compensation, and then vector averaging is performed-that is, adding and averaging are performed for each I component and Q component. By this means, the maximum Doppler frequency vector can be calculated.

$$\overline{p_l}\big|_{q} = \sum_{m}\left[(p_{l,m})_I + j\left|(p_{l,m})_q\right|\right] \qquad \text{... Equation (6)}$$

Vector combining (averaging) is further performed for averages of differential detection output after frequency offset compensation obtained for each finger, as shown in Equation (7) below.

$$p = \sum_{l}\overline{p_l}\big|_{q} \qquad \text{... Equation (7)}$$

By detecting the angle (equivalent to the angular frequency) for the obtained Doppler frequency vector p, the maximum Doppler frequency can be obtained.

Phase rotation caused by frequency offset can be considered uniform with respect to the measurement time (on the order of several seconds). Phase rotation due to fading fluctuations is not uniform in a short interval with regard to either amount of rotation or direction of rotation, and therefore the difference between an average detected value over a long period and an instantaneous amount of rotation is large, and if phase rotation compensation is performed based on an incorrect detected value, channel estimation precision may actually deteriorate.

On the other hand, when the Doppler frequency is high, the influence of phase rotation due to fading fluctuations on in-phase additions cannot be ignored, and therefore it is probably preferable to compensate for phase rotation due to both frequency offset and fading fluctuations, rather than for phase rotation due to frequency offset alone. In any event, compensation for phase rotation due to fading fluctuations depends on detection precision over a short period.

By detecting phase rotation caused by frequency offset and phase rotation caused by fD separately in this way, and reflecting both phase rotation amounts in channel estimation, it is possible to prevent deterioration of channel estimation when there is a large difference between an average detected value over a long period and an instantaneous phase rotation amount, and also to lessen the influence of phase rotation due to fading on in-phase additions.

The frequency offset detection result obtained by the phase rotation detection circuit 205 is output to per-symbol phase rotation compensation circuits 209 and 210 and the per-slot phase rotation compensation circuit 207. That is to say, in the present invention, per-symbol compensation and pre-weighted-addition per-slot compensation are used as phase rotation compensation. Therefore, in intra-slot processing, phase rotation is compensated for on a symbol-by-symbol basis and, moreover, phase rotation is compensated for on a slot-by-slot basis (also using preceding and following slots).

By carrying out this kind of two-stage phase rotation compensation, first, the frequency offset component can be eliminated from the channel estimate of each symbol by per-symbol compensation and it is possible to improve the precision of per-slot channel estimation precision by in-phase addition, and then it is possible to improve the precision of channel estimation by weighted addition by means of WMSA by eliminating the frequency offset component between preceding and succeeding slots with respect to a demodulation slot in WMSA. In this way, phase rotation compensation can be performed separately at the symbol level and the slot level, making it possible to obtain a channel estimate with a high degree of precision.

Also, when per-symbol phase rotation compensation and per-slot phase rotation compensation are performed as described above, a case where the processing unit for performing channel estimation is a symbol unit, and a case where the processing unit for performing channel estimation is a slot unit, can be considered. When channel estimates are obtained on a symbol-by-symbol basis, it is necessary to perform symbol adjustment when performing channel estimation.

Per-symbol phase rotation compensation circuits 209 and 210, and the per-slot phase rotation compensation circuit 207, respectively, obtain a phase rotation compensation value by means of actual computations such as shown below.

Correlated output after in-phase arrangement by multiplying the pilot part PL pattern and eliminating the data modulation component is as follows:

$$pl(m)=pl.i+jpl.q \text{ (m=0 to 5: m representing symbols)} \qquad \text{Equation (8)}$$

The per-symbol phase rotation compensation value obtained by per-symbol phase rotation compensation circuits 209 and 210 is calculated as follows:

$$e j( \Delta \theta \text{ symb*m})=ad\_symb.i(m) + j \cdot ad\_symb.q(m) \qquad \text{Equation (9)}$$

The per-slot phase rotation compensation value obtained by the per-slot phase rotation compensation circuit 207 is calculated as follows:

$$ej(\Delta\theta slot*t)=ad\_slot.i(t)+j \cdot ad\_slot.q(t)$$

$$(t=-2,-1,0,+1,+2) \qquad \text{Equation (10)}$$

The phase rotation compensation value ..symbol of per-symbol phase rotation compensation circuit 210 is output to multiplier 201, and is multiplied by the despread signal prior to PL pattern multiplication. By this means, phase rotation compensation is performed on a symbol-by-symbol basis before estimating correlation with the PL pattern.

Correlation output pl(m) resulting from multiplying the pilot part despread signal subjected to phase rotation compensation on a symbol-by-symbol basis by the PL pattern is output to the in-phase addition circuit 203. In the in-phase addition circuit 203, in-phase addition is performed by means of the following equation:

$$ch(t,0) = \Sigma pl(m) \cdot ej(\Delta\theta symb*m) \qquad \text{Equation (11)}$$

Here, m is assumed to be a value from 0 to 5. ch(t,m) is the channel estimate for slot t, symbol m. This channel estimate is the value before weighted addition (WMSA (Weighted Multi-Symbol Averaging)).

Next, the channel estimate after in-phase addition is output to the weighted addition circuit 204. In the weighted addition circuit 204, WMSA is performed using weight coefficient a calculated by the weight coefficient calculation circuit 208 and phase rotation compensation value ??slot, which is the output from the per-slot phase rotation compensation circuit 207. In WMSA compensation, ??slot compensation is performed centered on the slot to be modulated.

In WMSA, if the channel estimate of the mth symbol of the nth slot of the 1st branch is designated as shown in Equation (12) below,

$$\overset{\wedge}{h_l}(n,m) \qquad \text{Equation (12)}$$

the channel estimate of each slot after in-phase addition is as shown in Equation (13), and by further using the channel estimates of a plurality of slots before and after, the relationship shown in Equation (14) is established.

$$\hat{\xi}_l(n) = \frac{1}{N_p} \sum_{m=0}^{N_p-1} \hat{h}_l(n,m) \qquad \text{... Equation (13)}$$

$$\hat{\xi}_l(n) = \sum_{i=-K+1}^{K} \alpha_i \hat{\xi}_l(n+i) \qquad \text{... Equation (14)}$$

Here, ai (=1) is the weight coefficient.

This WMSA technique is described in IEICE Technical Report RCS97-163, 19987-11, "Characteristics of a DS/CDMA Weighted Multi-Symbol Averaging (WMSA) Pilot Channel" by Abeta, Ando, Sawabashi, Adachi, et al, entire content of which is expressly incorporated by reference herein.

When WMSA is performed by per-slot phase rotation compensation using this technique, the channel estimate of the first symbol of the demodulation slot is obtained by means of the following equation:

$$CH(t,0) = \Sigma W(t) \cdot ch(t,0) \cdot ej(\Delta\theta slot * t) \qquad \text{Equation (15)}$$

Here, it is assumed that t = -2, -1, 0, +1, +2, five slots, but there is no particular limit on the number of slots. W(t) is the WMSA weight coefficient. CH(t,m) is the channel estimate of slot t, symbol m. This channel estimate is the value after WMSA.

Therefore, the channel estimate for each symbol is given by the following equation:

$$CH(t,m) = CH(t,0) \cdot ej(\Delta\theta symb * m) \qquad \text{Equation (16)}$$

In the above channel estimate computation, WMSA computation after compensation between slots is performed, but in above Equation (11), compensation is performed with this estimate aligned with the start of a slot. Therefore, if WMSA is performed directly, the obtained channel estimate will correspond to the start of the slot. Thus, when performing coherent detection by calculating channel estimates on a symbol-by-symbol basis, the channel estimate of each symbol can be obtained if multiplication by phase rotation compensation value ..symbol is performed directly from the symbol after the first symbol. That is to say, when calculating channel estimates on a symbol-by-symbol basis phase rotation compensation value ..symbol obtained by per-symbol phase rotation compensation circuit 209 is multiplied by the output of the weighted addition circuit 204 by means of multiplier 206 (symbol-by-symbol processing).

However, when performing coherent detection with slot-by-slot channel estimates, it is probably best to use the channel estimate for the slot center (or the center of the pilot symbol interval), and it is therefore desirable to perform coherent detection with a value obtained by multiplying the value after WMSA by a value of about 4*..symbol (when a slot is 10 pilot symbols in length).

It is possible to change between use of a slot average channel estimate and a symbol-by-symbol channel estimate as convenient. When a symbol-by-symbol channel estimate is used, an indication of the fact that the channel estimate is a symbol-by-symbol estimate is input to per-symbol phase rotation compensation circuit 209, and per-symbol phase rotation compensation circuit 209 multiplies the output of the weighted addition circuit 204 by phase rotation compensation value ..symbol in accordance with that indication. On the other hand, when a slot average channel estimate is used, processing to align the channel estimate with the slot center value is performed in accordance with an indication of the fact that the channel estimate is a slot average.

As compensation is performed separately for phase rotation caused by frequency offset and phase rotation caused by fading fluctuations in this way, and both compensations are reflected in channel estimation, channel estimation precision is improved without causing deterioration of reception quality.

Moreover, channel estimation precision can be improved by performing channel estimation by compensating for phase rotation on a symbol-by-symbol basis (intra-slot processing) before despread signal in-phase addition, and further compensating for phase rotation on a slot-by-slot basis (inter-slot processing) after in-phase addition.

In this embodiment, a case has been described where a slot average channel estimate or symbol-by-symbol channel estimate is obtained by performing both symbol-by-symbol phase rotation compensation and slot-by-slot phase rotation compensation, but with the present invention it is also possible for a slot average channel estimate or symbol-by-symbol channel estimate to be obtained by performing only slot-by-slot phase rotation compensation.

Thus, according to a phase rotation detection apparatus of this embodiment, phase rotation detection is performed with received signal reliability taken into consideration by performing vector combining of differential detection output, and with the frequency offset and maximum Doppler frequency calculated separately, as a result of which angle computation (an inverse tangent function) for compensation is unnecessary, and the hardware scale can be reduced. Moreover, the influence of frequency offset can be eliminated in maximum Doppler frequency detection, making possible high-precision maximum Doppler frequency detection.

(Embodiment 2)

In this embodiment, a case is described where differential detection is performed with the differential detection time interval made variable, and the optimal differential detection output is obtained for a phase rotation amount assumed to be the object of detection.

In differential detection in frequency offset detection and maximum Doppler frequency detection, a channel estimate for an arbitrary time interval is used. As regards differential detection output, the value varies according to the time interval for which differential detection is performed. For example, if the time interval is halved, the phase rotation amount will be halved, and so the differential detection output will decrease accordingly.

Therefore, when the frequency offset or maximum Doppler frequency to be detected is small-that is, when the phase rotation amount is small-it is desirable to make the differential detection time interval large in order to prevent the influence of noise, and so detect phase rotation reliably. Conversely, when the phase rotation amount is large, erroneous detection may result if the differential detection time interval is too long, and therefore it is desirable for the differential detection time interval to be made short. Thus, an optimal differential detection time interval can be considered to exist for a phase rotation amount that is assumed to be the object of detection.

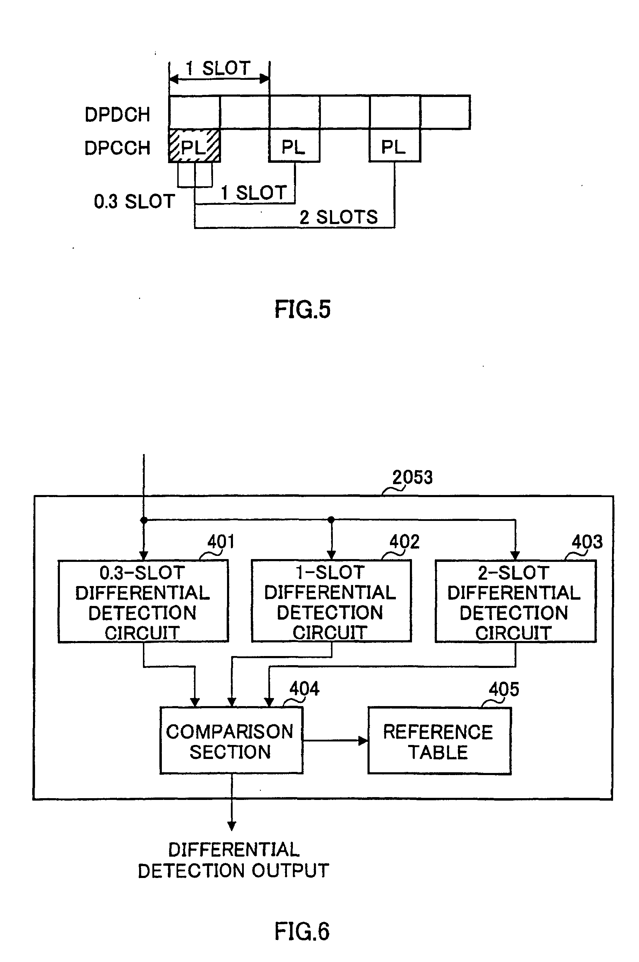

In the slot configuration shown in FIG.5, when a channel estimate is obtained by averaging the pilot symbols (PL) within each slot, and performing differential detection with respect to the channel estimate of the preceding slot, the differential detection interval is one slot. When channel estimate differential detection is performed every other slot, the differential detection interval is two slots. When differential detection is performed using the channel estimate obtained by averaging three symbols in the first half among the pilot symbols within one slot, and the channel estimate obtained by averaging three symbols in the latter half, the differential detection interval is 0.3 slot (to be exact, 10/3 slot). Differential detection time intervals are not limited to these three kinds. By using differential detection outputs with different time intervals in this way, it is possible to perform more reliable phase rotation detection.

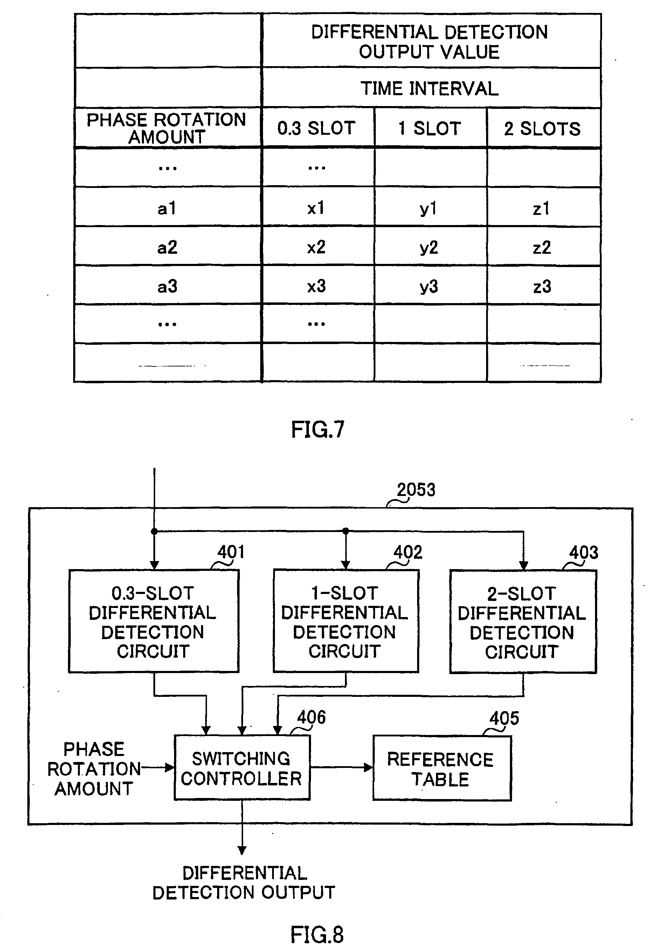

To be specific, when a plurality of kinds of differential detection output are used, a differential detection circuit 2053 that has a configuration such as that shown in FIG.6, for example, is used. This differential detection circuit 2053 holds a reference table 405 such as that shown in FIG.7 that stores the correct relationship between three kinds of differential detection output values and phase rotation amounts.

This differential detection circuit 2053 contains differential detection circuits (0.3-slot differential detection circuit 401, 1-slot differential detection circuit 402, and 2-slot differential detection circuit 403) that operate constantly at these three time intervals for the purpose of phase rotation detection. All of these differential detection circuits 401 through 403 are operated, and output their respective differential detection outputs to a comparison section 404.

The comparison section 404 compares the respective differential detection outputs with the reference table 405, and outputs the optimal differential detection output. For example, when the phase rotation amount to be detected is small, the 0.3-slot interval differential detection output value is unreliable because it is small, and detection of the phase rotation amount is performed using the 2-slot interval differential detection output value. On the other hand, when the phase rotation amount to be detected is large, using only the 2-slot interval output may result in erroneous detection, and therefore the 0.3-slot interval differential detection interval or 1-slot interval differential detection output is compared with the reference table 405, and differential detection output is selected. A configuration is also possible whereby a table such as that shown in FIG.7 is not used, and the time interval is switched as appropriate according to the phase rotation amount.

It is also possible for the three kinds of differential detection circuits 401 through 403 not be operated constantly, but for a configuration such as that shown in FIG.8 to be used, with the differential detection circuits operated on a switched basis by a switching controller 406.

That is to say, if the detected phase rotation amount is large, based on the differential detection output value from the 1-slot differential detection circuit 402, operation of the 2-slot differential detection circuit 403 is halted and the 0.3-slot differential detection circuit 401 is operated. And if the detected phase rotation amount is small, the 0.3-slot differential detection circuit 401 is halted and the 2-slot differential detection circuit 403 is operated. By this means it is possible to detect a phase rotation amount with higher precision.

When a plurality of differential detection circuits are used, it is necessary for the averaging time of the between-symbol averaging circuit 2052 to be switched as appropriate according to the differential detection circuit measurement period.

(Embodiment 3)

In this embodiment, a case is described where addition (averaging) is performed using only differential detection output with high reliability. Differential detection output of a low level is greatly affected by noise and is of low reliability. If phase rotation detection is performed using such low-reliability differential detection output, detection error will be large.

Therefore, differential detection output of a low level is excluded, and only high-level output is used in performing phase rotation detection. By this means detection precision can be raised.

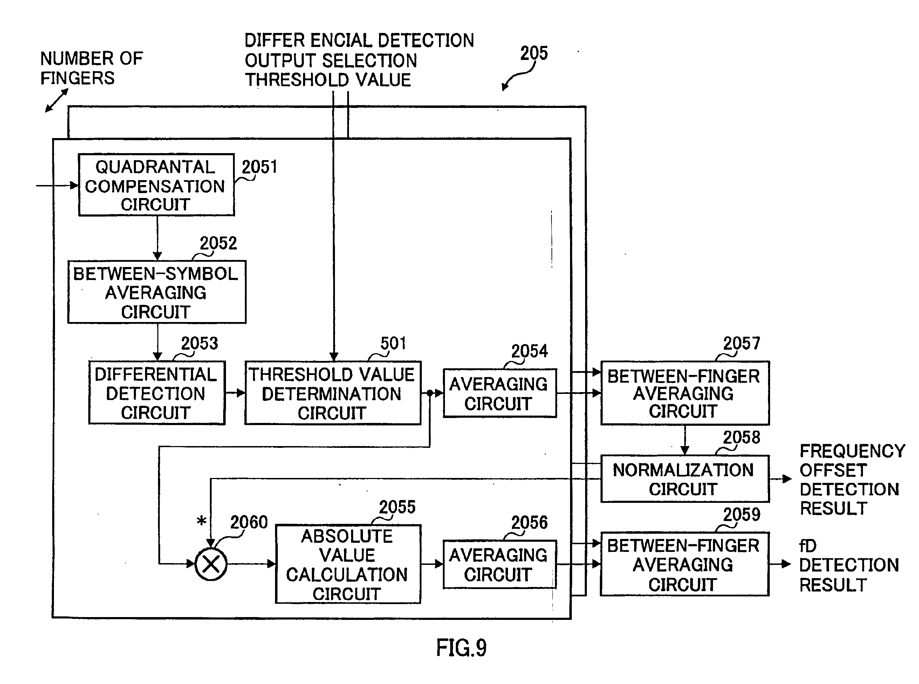

FIG.9 is a block diagram showing the configuration of a phase rotation detection apparatus according to Embodiment 3 of the present invention. Parts in FIG.9 identical to those in FIG.3 are assigned the same codes as in FIG.3 and their detailed explanations are omitted.

A phase rotation detection apparatus according to this embodiment is provided with a threshold value determination circuit 501 that takes into consideration the reliability of differential detection output and selects differential detection output with high reliability. That is to say, differential detection output from a differential detection circuit 2053 is sent to the threshold value determination circuit 501, and in the threshold value determination circuit 501 that differential detection output and a differential detection output selection threshold value are compared, and only differential detection output that exceeds that threshold value is output to an averaging circuit 2054 and multiplier 2060.

Here, a variety of items can be considered for use as the threshold value employed to select differential detection output. For example, the threshold value used for finger allocation by the path search section can be used. The finger allocation threshold value is the threshold value used to select a valid path, and is obtained from the average value of noise levels other than peaks to which fingers are allocated from among delay profiles used in a path search.

Thus, according to this embodiment, differential detection output whose reception level is low-that is to say, whose reliability is low-is eliminated, and phase rotation detection is performed using only high-reliability differential detection output, so enabling detection precision to be improved.

(Embodiment 4)

In this embodiment, a case is described where absolute value calculation is performed using only differential detection output with high reliability. Differential detection output of a low level greatly influences the performance of fD detection in which the absolute value of a Q component is obtained. For example, when only quadrature component (Q component) absolute values are added in the absolute value calculation circuit 2055, detection error will be large if absolute values are obtained using such low-reliability differential detection output when FD is low or the desired signal reception level is low and noise is high.

For differential detection output used in fD detection, therefore, differential detection output selection is carried out using a threshold value. By this means, fD detection averaging is performed with low-level differential detection output excluded, thus enabling fD detection precision to be raised.

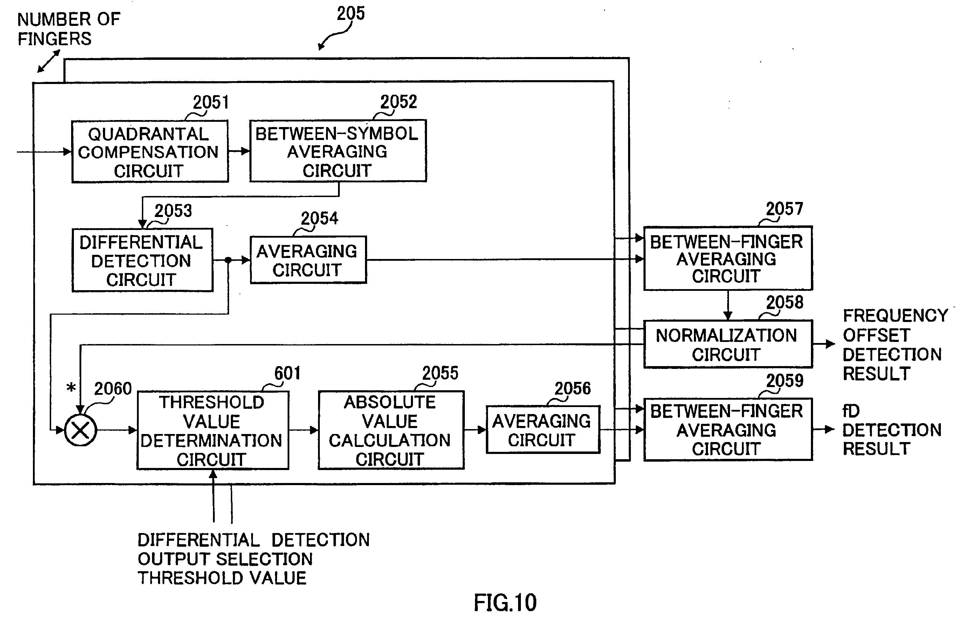

FIG. 10 is a block diagram showing the configuration of a phase rotation detection apparatus according to Embodiment 4 of the present invention. Parts in FIG.10 identical to those in FIG.3 are assigned the same codes as in FIG.3 and their detailed explanations are omitted.

A phase rotation detection apparatus according to this embodiment is provided with a threshold value determination circuit 601 that takes into consideration the reliability of frequency offset compensated differential detection output and selects frequency offset compensated differential detection output with high reliability. That is to say, differential detection output from a differential detection circuit 2053 is sent to the threshold value determination circuit 601 after being compensated for frequency offset, and in the threshold value determination circuit 601 that differential detection output and a differential detection output selection threshold value are compared, and only differential detection output that exceeds that threshold value is output to an absolute value calculation circuit 2055.

Thus, according to this embodiment, differential detection output following frequency offset compensation whose reception level is low-that is to say, whose reliability is low-is eliminated, and phase rotation detection is performed using only high-reliability differential detection output after frequency offset compensation, so enabling detection precision to be improved.

Also, in this embodiment, a method can be used whereby, with a plurality of fingers, only differential detection outputs in the finger with the maximum reception level (for example, determination by delay profile level) are added.

(Embodiment 5)

In this embodiment, also, a case is described where absolute value calculation is performed using only differential detection output with high reliability.

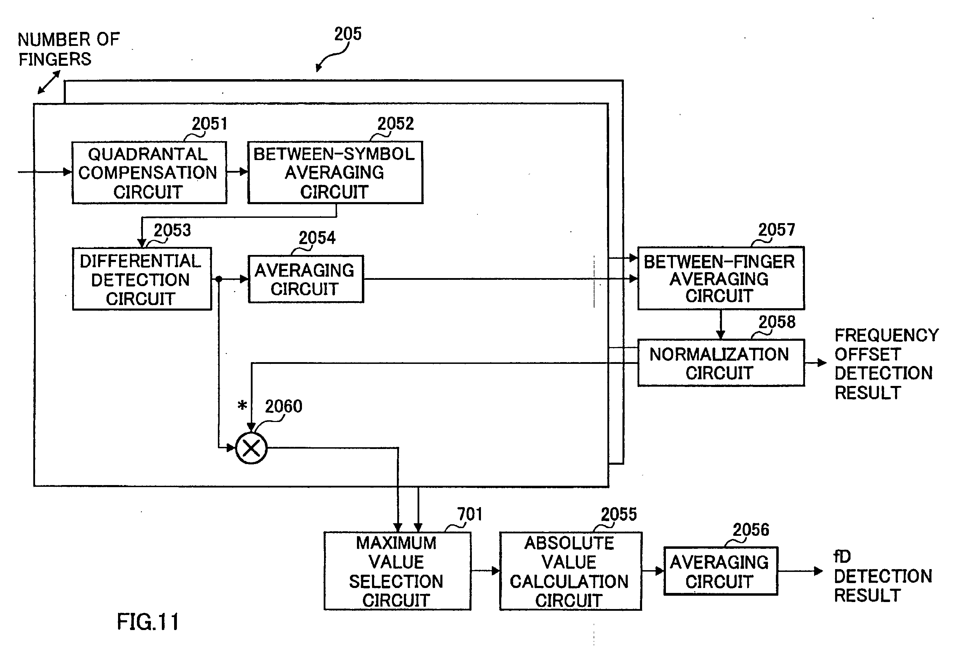

FIG.11 is a block diagram showing the configuration of a phase rotation detection apparatus according to Embodiment 5 of the present invention. Parts in FIG.11 identical to those in FIG.3 are assigned the same codes as in FIG.3 and their detailed explanations are omitted.

A phase rotation detection apparatus according to this embodiment is provided with a maximum value determination circuit 701 that takes into consideration the reliability of frequency offset compensated differential detection output and selects frequency offset compensated differential detection output with high reliability. This maximum value determination circuit 701 selects the maximum output among differential detection outputs after frequency offset compensation between fingers.

That is to say, differential detection output from a differential detection circuit 2053 is sent to the maximum value selection circuit 701 on a finger-by-finger basis after being compensated for frequency offset, and in the maximum value selection circuit 701 the highest-level differential detection output is selected from the differential detection outputs of each finger, and that differential detection output is output to an absolute value calculation circuit 2055.

Thus, according to this embodiment, also, differential detection output following frequency offset compensation whose reception level is low-that is to say, whose reliability is low-is eliminated, and phase rotation detection is performed using only high-reliability differential detection output after frequency offset compensation, so enabling detection precision to be improved.

(Embodiment 6)

In this embodiment, also, a case is described where absolute value calculation is performed using only differential detection output with high reliability.

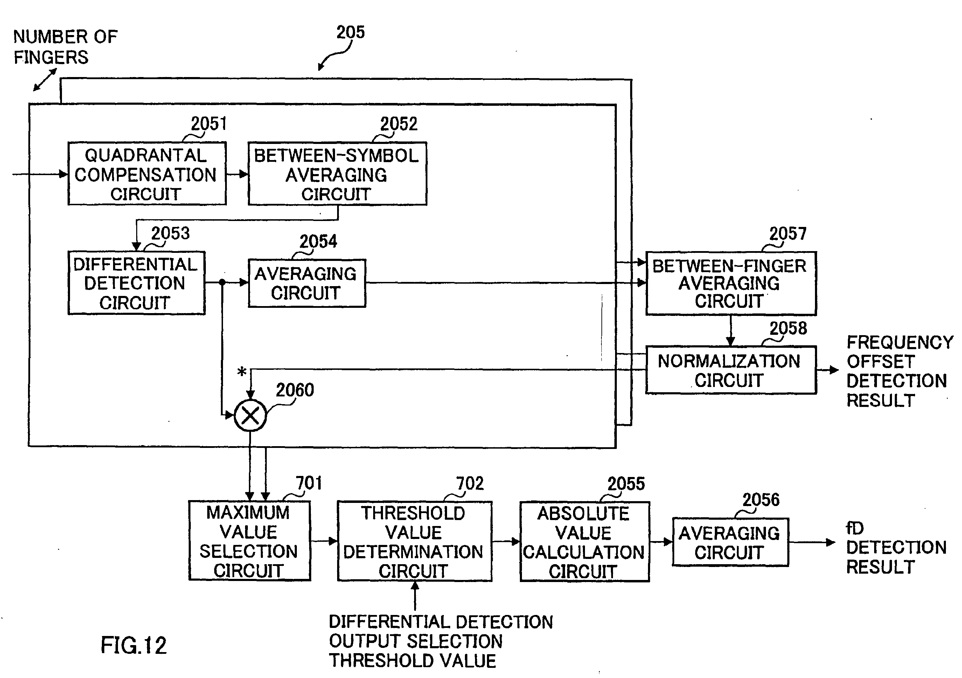

FIG.12 is a block diagram showing the configuration of a phase rotation detection apparatus according to Embodiment 6 of the present invention. Parts in FIG.12 identical to those in FIG.3 are assigned the same codes as in FIG.3 and their detailed explanations are omitted.

A phase rotation detection apparatus according to this embodiment is provided with a maximum value determination circuit 701 that takes into consideration the reliability of frequency offset compensated differential detection output and selects frequency offset compensated differential detection output with high reliability. A phase rotation detection apparatus according to this embodiment is also provided with a threshold value determination circuit 702 for eliminating output that does not exceed a predetermined threshold value even if it is the selected maximum differential detection output.

That is to say, differential detection output from a differential detection circuit 2053 is sent to the maximum value selection circuit 701 on a finger-by-finger basis after being compensated for frequency offset, and in the maximum value selection circuit 701 the highest-level differential detection output is selected from the differential detection outputs of each finger, and that differential detection output is output to the threshold value determination circuit 702. In the threshold value determination circuit 702 that differential detection output and a differential detection output selection threshold value are compared, and only differential detection output that exceeds that threshold value is output to an absolute value calculation circuit 2055.

Thus, according to this embodiment, also, differential detection output following frequency offset compensation whose reception level is low-that is to say, whose reliability is low-is eliminated, and phase rotation detection is performed using only high-reliability differential detection output after frequency offset compensation, so enabling detection precision to be improved. This embodiment enables detection precision to be improved to a greater extent than Embodiment 5.

(Embodiment 7)

In this embodiment, a case is described where, when an fD detection result is output, the criterion is changed as appropriate according to communication quality such as the reception SIR.

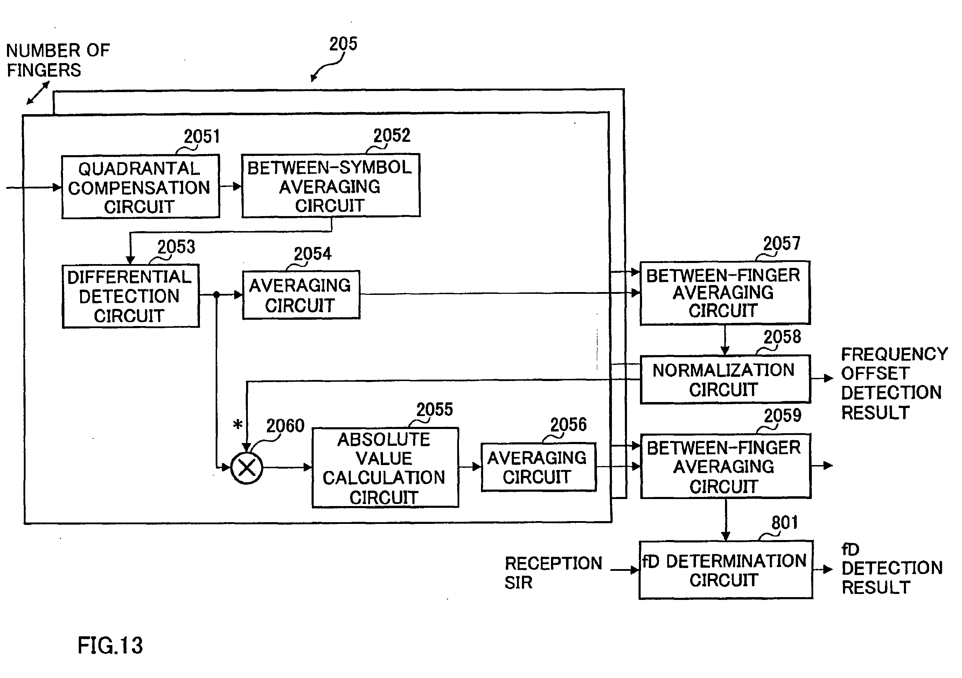

FIG.13 is a block diagram showing the configuration of a phase rotation detection apparatus according to Embodiment 7 of the present invention. Parts in FIG.13 identical to those in FIG.3 are assigned the same codes as in FIG.3 and their detailed explanations are omitted.

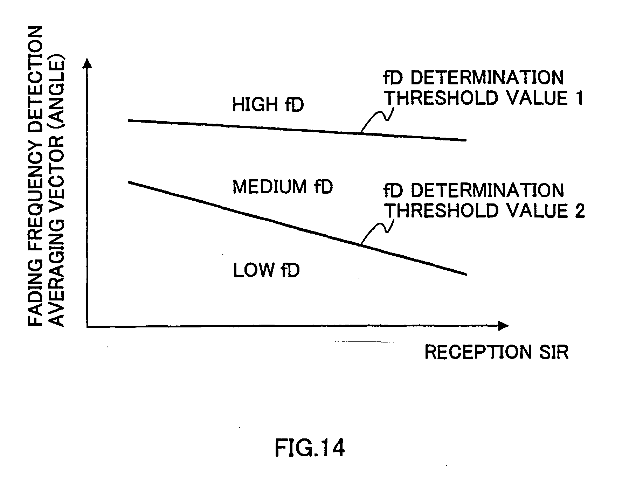

The phase rotation detection apparatus shown in FIG.13 is provided with an fD determination circuit 801 that performs fD determination in accordance with communication quality (the reception SIR). This fD determination circuit 801 performs fD determination using a between-finger averaging circuit 2059, taking the reception SIR into consideration. To be specific, a differential detection output reception SIR averaged by the between-finger averaging circuit 2059 is output to the fD determination circuit 801. The fD determination circuit 801 is provided with the determination table shown in FIG.14 beforehand, and determines threshold values (determination threshold value 1, determination threshold value 2) by referring to the determination table shown in FIG.14 in accordance with the reception SIR. The fD determination circuit 801 then performs determination in fD detection using these threshold values. In FIG.13, a case is shown where fD determination is performed in three steps: high, medium, and low. The determination table may also be based on the differential detection interval.

In above-described Embodiments 1 through 7, the phase rotation detection period may also be made variable. To be specific, even if error increases to some extent immediately after the start of communication since the frequency offset and fD are unknown, in a specific environment the detection period is made shorter than normal to hasten the convergence of the frequency offset and fD. By this means, communication quality can quickly be brought to a satisfactory level.

In above-described Embodiments 1 through 7, when the SIR is low the frequency offset detection precision deteriorates and reception characteristics actually degrade due to the execution of erroneous compensation. If transmission power control is not yet operating adequately at the start of communication, the quality of the propagation path will deteriorate markedly due to shadowing and the like, and if this state continues, the above-describe situation will occur in circumstances such as during communication with a communication terminal in the process of diversity handover (DHO) in which there is a possibility of failure to follow transmission power control.

Also, regarding reception in a state in which radio channel synchronization has not been acquired between a base station and communication terminal, the precision of phase rotation detection may degrade because channel quality is poor, and synchronization acquisition performance may actually deteriorate due to the associated compensation. This situation occurs, for example, when radio channel synchronization has not yet been established at the start of communication, and transmission power control is not operating adequately.

Therefore, the way in which phase rotation detection according to the present invention is applied in cases of this kind where the SIR is low or synchronization has not been acquired will be described using Embodiments 8 through 11 below.

(Embodiment 8)

In this embodiment, a description is given of how phase rotation detection according to the present invention is applied in an environment with poor communication quality, such as when a low SIR state continues for a long period.

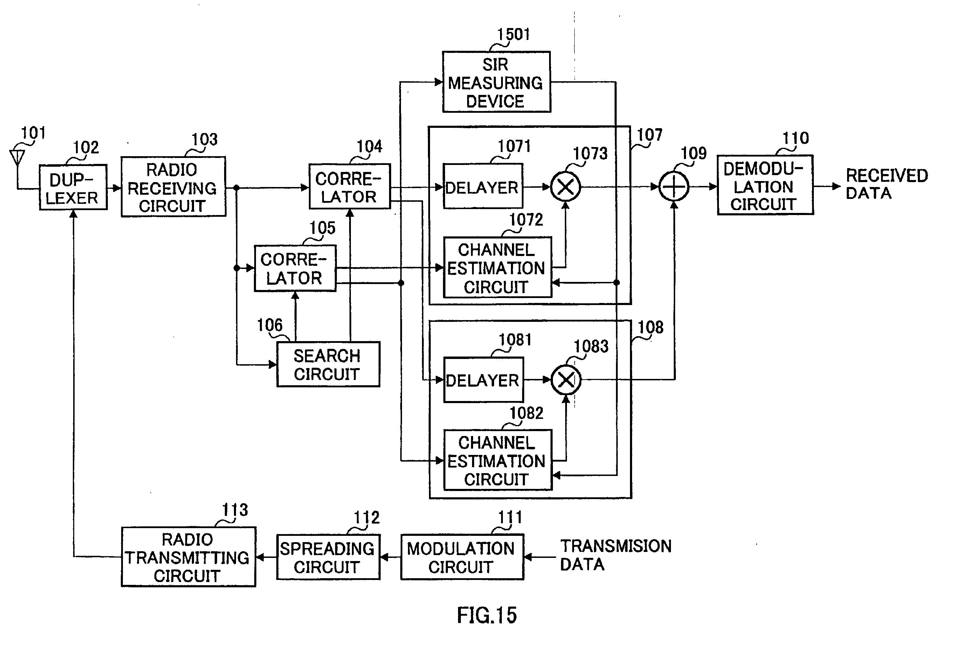

FIG.15 is a block diagram showing the configuration of a base station provided with a phase rotation detection apparatus according to Embodiment 8 of the present invention. Parts in FIG.15 identical to those in FIG.1 are assigned the same codes as in FIG.1 and their detailed explanations are omitted. With the base station shown in FIG.15, a case is described where the number of RAKE-combined paths is two, but this embodiment can also be applied to cases where the number of RAKE-combined paths is three or more. Also, in the base station shown in FIG.15, notation is given for only a single-user system in order to simplify the explanation, but this embodiment can also be applied in a similar way for a multi-user system.

The base station shown in FIG.15 is provided with an SIR measuring device 1501 that measures the reception SIR using output from a correlator 105. This SIR measuring device 1501 outputs the measured reception SIR to a channel estimation circuit 1082 of a coherent detection circuit 108.

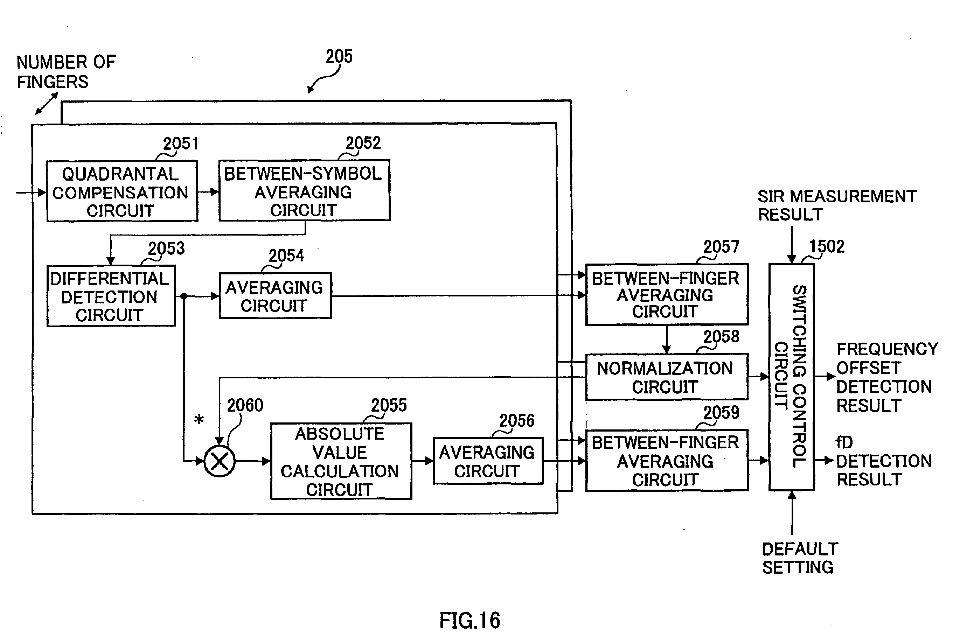

FIG.16 is a block diagram showing the configuration of a phase rotation detection circuit according to Embodiment 8 of the present invention. Parts in FIG.16 identical to those in FIG.3 are assigned the same codes as in FIG.3 and their detailed explanations are omitted.

The phase rotation detection circuit shown in FIG.16 is provided with a switching control circuit 1502 that switches the output of frequency offset detection results from a normalization circuit 2058 and fD detection results from a between-finger averaging circuit 2059. The reception SIR that is the SIR measurement result is output from the SIR measuring device 1501 to this switching control circuit 1502.

Next, the operation of a base station provided with a phase rotation detection circuit that has the above configuration will be described.

In correlator 105, the result of executing despreading processing on a signal that has undergone radio reception processing is output to channel estimation circuits 1072 and 1082 of coherent detection circuits 107 and 108, and is also output to the SIR measuring device 1501. The SIR measuring device 1501 performs SIR measurement using the pilot part within the received signal. To be specific, reception SIR averaging is performed in the phase rotation detection period.

Then, the averaged reception SIR is output to channel estimation circuits 1072 and 1082 of coherent detection circuits 107 and 108. To be specific, the averaged reception SIR (SIR measurement result) is output to the switching control circuit 1502 of channel estimation circuits 1072 and 1082.

The switching control circuit 1502 performs threshold value determination on the averaged reception SIR, and performs switching as to whether or not the outputs of a normalization circuit 2058 and between-finger averaging circuit 2059 (frequency offset detection result and fD detection result) are to be output directly.

That is to say, when the averaged reception SIR is higher than a threshold value (when communication quality is good), the frequency offset detection result and fD detection result obtained in the detection period of phase rotation detection according to the present invention are output directly. On the other hand, when the averaged reception SIR is lower than the threshold value (when communication quality is poor), the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

Thus, according to this embodiment, when communication quality is poor a phase rotation detection result whose precision is assumed to be low is not used, thereby making it possible to prevent compensation from being performed based on low-precision phase rotation detection results, and so to prevent deterioration of reception characteristics.

In this embodiment, a case has been described where determination of whether communication quality is good or bad is based on the reception SIR, but in the present invention a parameter other than reception SIR may also be used for communication quality.

(Embodiment 9)

In this embodiment, a description is given of how phase rotation detection according to the present invention is applied in a state in which radio channel synchronization has not been acquired between a base station and communication terminal.

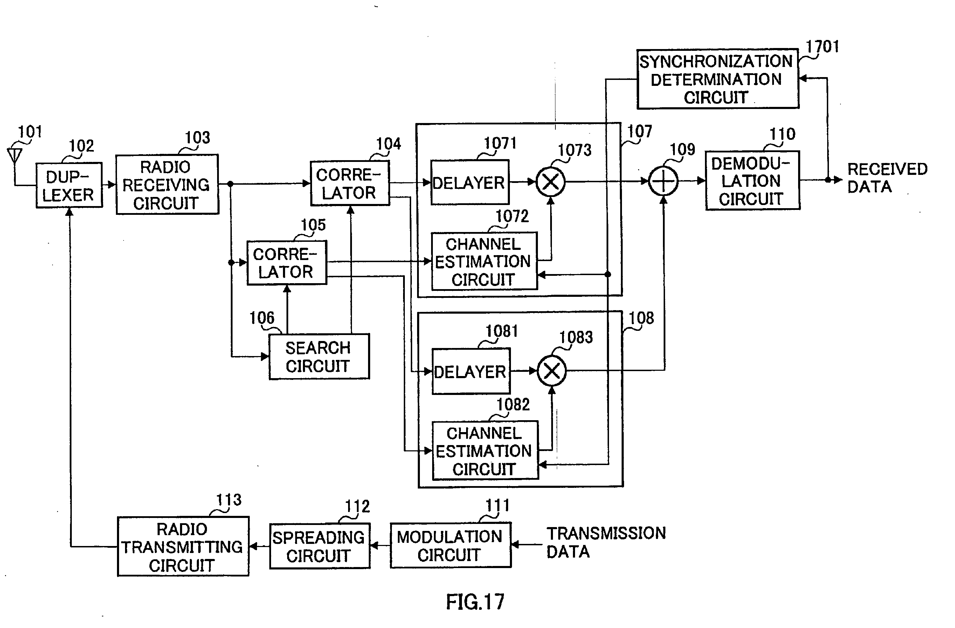

FIG.17 is a block diagram showing the configuration of a base station provided with a phase rotation detection apparatus according to Embodiment 9 of the present invention. Parts in FIG.17 identical to those in FIG.1 are assigned the same codes as in FIG.1 and their detailed explanations are omitted. With the base station shown in FIG.17, a case is described where the number of RAKE-combined paths is two, but this embodiment can also be applied to cases where the number of RAKE-combined paths is three or more. Also, in the base station shown in FIG.17, notation is given for only a single-user system in order to simplify the explanation, but this embodiment can also be applied in a similar way for a multi-user system.

The base station shown in FIG.17 is provided with a synchronization determination circuit 1701 that determines whether or not synchronization has been acquired using the output of a demodulation circuit 110. This synchronization determination circuit 1701 outputs the synchronization determination result to channel estimation circuits 1072 and 1082 of coherent detection circuits 107 and 108.

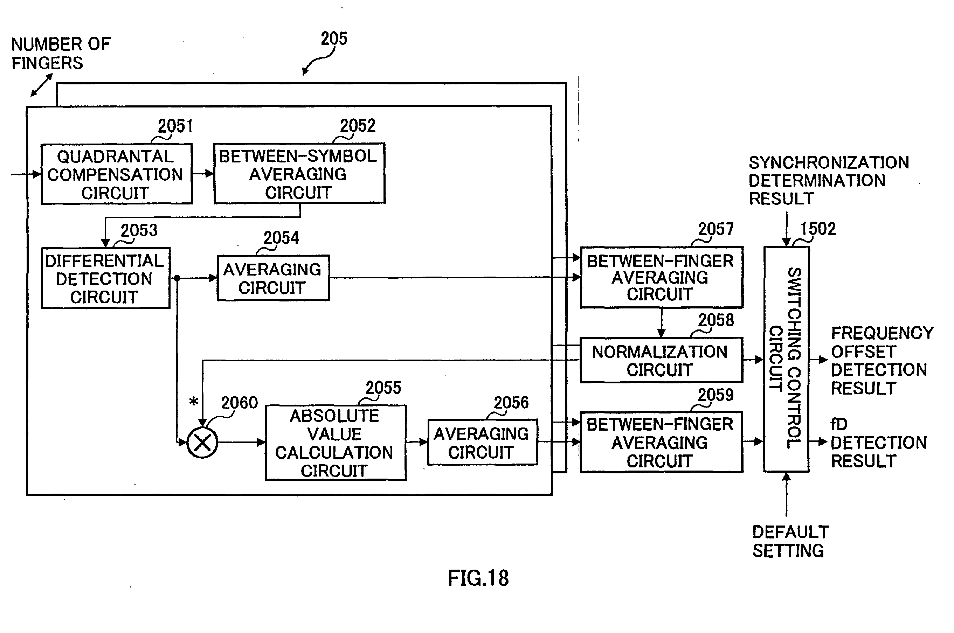

FIG.18 is a block diagram showing the configuration of a phase rotation detection circuit according to Embodiment 9 of the present invention. Parts in FIG.18 identical to those in FIG.3 are assigned the same codes as in FIG. 3 and their detailed explanations are omitted.

The phase rotation detection circuit shown in FIG.18 is provided with a switching control circuit 1502 that switches the output of frequency offset detection results from a normalization circuit 2058 and fD detection results from a between-finger averaging circuit 2059. The synchronization determination result is output from the synchronization determination circuit 1701 to this switching control circuit 1502.

Next, the operation of a base station provided with a phase rotation detection circuit that has the above configuration will be described.

Outputs that have undergone coherent detection by coherent detection circuit 107 and coherent detection circuit 108 using correlator 104 and 105 outputs, respectively, are RAKE-combined, and the RAKE-combined signal is output to the demodulation circuit 110. The demodulation circuit 110 performs demodulation processing on the RAKE-combined signal and obtains receive data. This receive data is output to the synchronization determination circuit 1701.

The synchronization determination circuit 1701 performs threshold value determination on the bit error rate of the pilot part or similar DPCCH data, and determines whether or not synchronization has been acquired. Then this synchronization determination result is output to the switching control circuit 1502 of channel estimation circuits 1072 and 1082.

The switching control circuit 1502 performs switching as to whether or not the outputs of the normalization circuit 2058 and between-finger averaging circuit 2059 (frequency offset detection result and fD detection result) are to be output directly, in accordance with the synchronization determination result.

That is to say, when the synchronization determination result indicates that synchronization has been established, the frequency offset detection result and fD detection result obtained in the detection period of phase rotation detection according to the present invention are output directly. On the other hand, when the synchronization determination result indicates that synchronization has not been established, the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

Thus, according to this embodiment, when synchronization has not been acquired a phase rotation detection result whose precision is assumed to be low is not used, thereby making it possible to prevent compensation from being performed based on low-precision phase rotation detection results, and so to prevent deterioration of reception characteristics.

Control in a state in which synchronization has not been established can also be applied in a case where synchronization is lost for some reason during communication, in the same way as at the start of communication. In such cases it is necessary for phase rotation to be pulled in rapidly from the state in which synchronization has not been established, and therefore the phase rotation detection period may be shortened-for example, to 1/3 the usual phase rotation detection period.

In this embodiment, a case has been. described where synchronization determination is performed using the bit error rate of the pilot part or similar DPCCH data, but another synchronization determination method may be used with the present invention.

(Embodiment 10)

As described in above Embodiments 8 and 9, with regard to degrading of reception characteristics due to deterioration of the precision of phase rotation detection, it can be considered that whether or not measures are necessary should be decided according to the degree of degradation of reception characteristics. Situations where communication is started, where propagation path quality deteriorates markedly, or where diversity handover is performed, as described above, are environments where received signal quality is poor-with a BLER (Block Error Rate) of 10-1 or more, for example-to begin with, and therefore the effects of deterioration of detection precision will probably tend not to appear directly in the reception characteristics (BLER). Rather, investigation is needed concerning characteristic deterioration related to the establishment of synchronization where operation is required in a low-SIR area.

Thus, in this embodiment, a case is described where control as to whether or not phase rotation detection according to the present invention is to be carried out is performed on the basis of an average SIR used in synchronization state and fD determination.

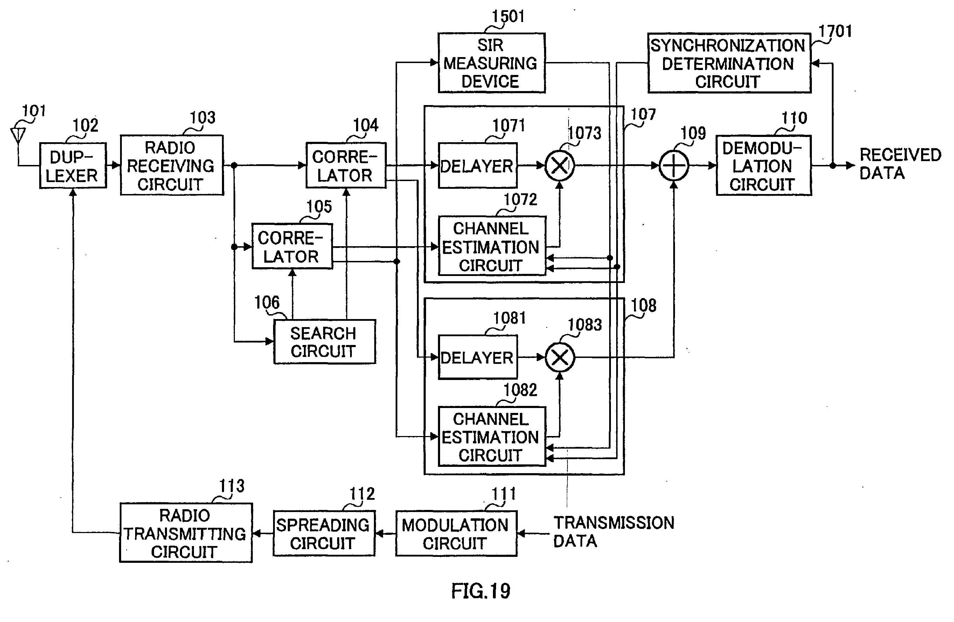

FIG. 19 is a block diagram showing the configuration of a base station provided with a phase rotation detection apparatus according to Embodiment 10 of the present invention. Parts in FIG.19 identical to those in FIG.1 are assigned the same codes as in FIG.1 and their detailed explanations are omitted. With the base station shown in FIG.19, a case is described where the number of RAKE-combined paths is two, but this embodiment can also be applied to cases where the number of RAKE-combined paths is three or more. Also, in the base station shown in FIG. 19, notation is given for only a single-user system in order to simplify the explanation, but this embodiment can also be applied in a similar way for a multi-user system.

The base station shown in FIG.19 is provided with an SIR measuring device 1501 that uses the output of a correlator 105, and a synchronization determination circuit 1701 that determines whether or not synchronization has been acquired using the output of a demodulation circuit 110.

The SIR measuring device 1501 outputs the measured reception SIR to a channel estimation circuit 1082 of a coherent detection circuit 108. The synchronization determination circuit 1701 outputs the synchronization determination result to channel estimation circuits 1072 and 1082 of coherent detection circuits 107 and 108.

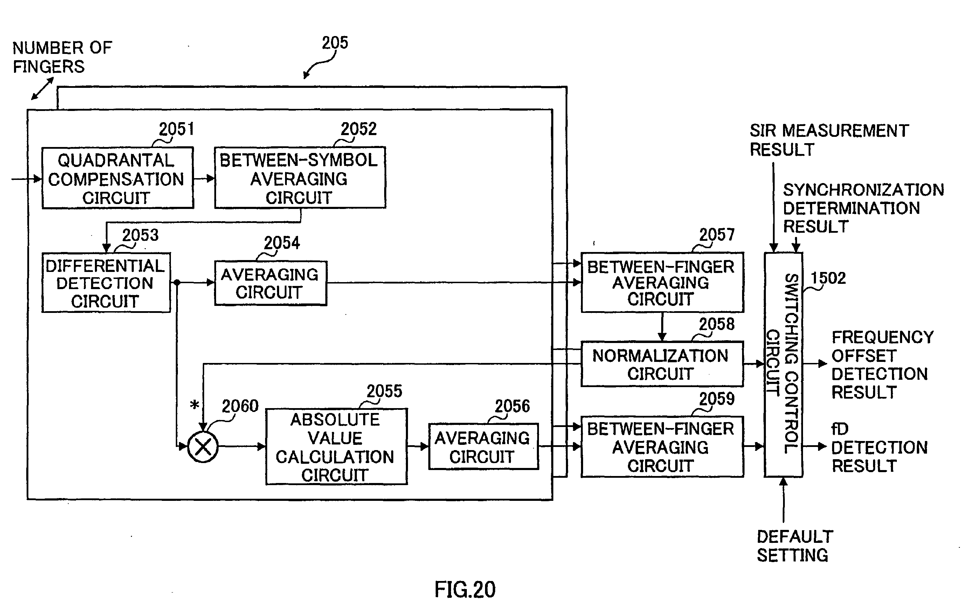

FIG.20 is a block diagram showing the configuration of a phase rotation detection circuit according to Embodiment 10 of the present invention. Parts in FIG.20 identical to those in FIG.3 are assigned the same codes as in FIG.3 and their detailed explanations are omitted.

The phase rotation detection circuit shown in FIG.20 is provided with a switching control circuit 1502 that switches the output of frequency offset detection results from a normalization circuit 2058 and fD detection results from a between-finger averaging circuit 2059. The reception SIR that is the SIR measurement result is output from the SIR measuring device 1501 to this switching control circuit 1502, and the synchronization determination result is also output from the synchronization determination circuit 1701 to this switching control circuit 1502.

Next, the operation of a base station provided with a phase rotation detection circuit that has the above configuration will be described.

In correlator 105, the result of executing despreading processing on a signal that has undergone radio reception processing is output to channel estimation circuits 1072 and 1082 of coherent detection circuits 107 and 108, and is also output to the SIR measuring device 1501. The SIR measuring device 1501 performs SIR measurement using the pilot part within the received signal. To be specific, reception SIR averaging is performed in the phase rotation detection period.

Then, the averaged reception SIR is output to channel estimation circuits 1072 and 1082 of coherent detection circuits 107 and 108. To be specific, the averaged reception SIR (SIR measurement result) is output to the switching control circuit 1502 of channel estimation circuits 1072 and 1082.

On the other hand, outputs that have undergone coherent detection by coherent detection circuit 107 and coherent detection circuit 108 using correlator 104 and 105 outputs, respectively, are RAKE-combined, and the RAKE-combined signal is output to the demodulation circuit 110. The demodulation circuit 110 performs demodulation processing on the RAKE-combined signal and obtains receive data. This receive data is output to the synchronization determination circuit 1701.

The synchronization determination circuit 1701 performs threshold value determination on the bit error rate of the pilot part or similar DPCCH data, and determines whether or not synchronization has been acquired. Then this synchronization determination result is output to the switching control circuit 1502 of channel estimation circuits 1072 and 1082.

The switching control circuit 1502 performs threshold value determination on the averaged reception SIR, and performs switching as to whether or not the outputs of the normalization circuit 2058 and between-finger averaging circuit 2059 (frequency offset detection result and fD detection result) are to be output directly.

That is to say, when the averaged reception SIR is higher than a threshold value (when communication quality is good), the frequency offset detection result and fD detection result obtained in the detection period of phase rotation detection according to the present invention are output directly. On the other hand, when the averaged reception SIR is lower than the threshold value (when communication quality is poor), the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

Also, the switching control circuit 1502 performs switching as to whether or not the outputs of the normalization circuit 2058 and between-finger averaging circuit 2059 (frequency offset detection result and fD detection result) are to be output directly, in accordance with the synchronization determination result.

That is to say, when the synchronization determination result indicates that synchronization has been established, the frequency offset detection result and fD detection result obtained in the detection period of phase rotation detection according to the present invention are output directly. On the other hand, when the synchronization determination result indicates that synchronization has not been established, the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

The way in which a phase rotation detection result of the present invention is reflected using synchronization establishment and an average SIR will now be described.

To be specific, the following operations are employed for two states: prior to synchronization establishment at the start of communication, and during other communication (including during DHO).

First, prior to synchronization establishment at the start of communication, dedicated channel (for example, DPDCH) transmission power is gradually increased until synchronization is established. Therefore, depending on the synchronization determination method, there may be an interval in which transmission is possible with an SIR that allows phase rotation detection before synchronization is established. In order to perform synchronization establishment reliably, it is safer to use a default setting rather than insisting on performing phase rotation detection compensation in that state. Therefore, prior to synchronization establishment at the start of communication, a default setting is used for phase rotation detection unconditionally without regard to the SIR.

According to this control, after synchronization is established reception characteristics improve due to phase rotation detection, and therefore, on the communication terminal side, although a little transmission power is necessary until synchronization is established, transmission power can be reduced after synchronization has been established.

During communication ( including during DHO), states can be divided, according to the state of synchronization, into an out-of-sync state and an in-sync state. In the out-of-sync state, phase rotation detection compensation operation is halted regardless of the SIR. On the other hand, in the in-sync state, when the SIR is lower than a certain threshold value, phase rotation detection compensation operation is halted or default setting is performed.

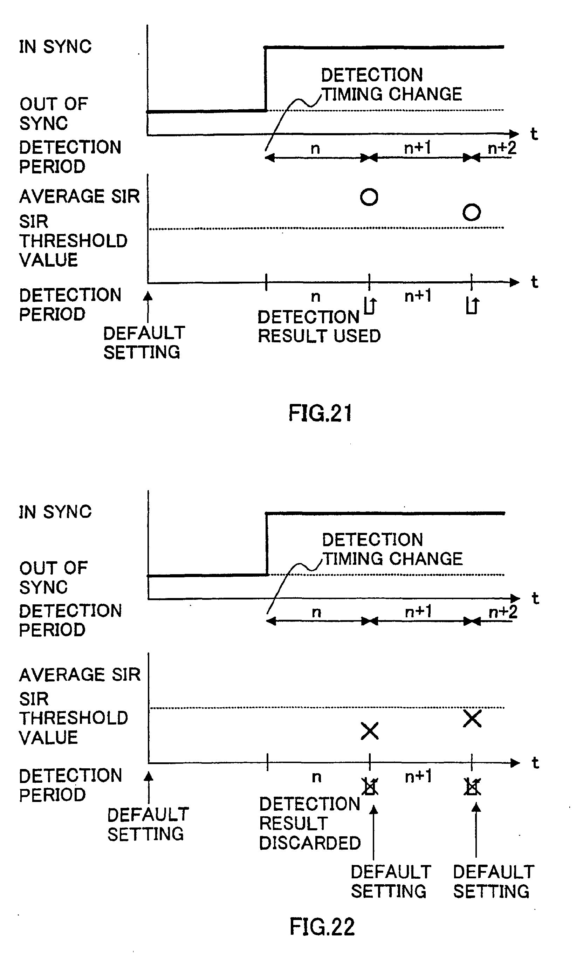

Thus, in this embodiment, in the out-of-sync state, phase rotation detection is halted unconditionally, and in the in-sync state, switching is performed in accordance with the SIR. This is explained below using FIG.21 and FIG. 22. FIG.21 and FIG.22 are drawings showing a detection timing change of phase rotation detection according to Embodiment 10 of the present invention.

First, as shown in FIG.21, when synchronization establishment is determined by the synchronization determination circuit 1701 from a state in which synchronization is not established, phase rotation detection according to the present invention is started (DETECTION TIMING CHANGE in FIG.21).

In FIG.21, in detection period n, the average SIR is measured by the SIR measuring device 1501, and the average SIR and SIR threshold value are compared in the switching control circuit 1502. In detection period n, there is a transition from a state in which the average SIR is lower than the SIR threshold value to a state in which the average SIR exceeds the SIR threshold value. That is to say, at the end point of detection period n, the average SIR exceeds the SIR threshold value. Therefore, the phase rotation detection result for this detection period n is output by the switching control circuit 1502. Similarly, the phase rotation detection result for detection period n+1 in FIG.21 is also output by the switching control circuit 1502.

As shown in FIG.22, when synchronization establishment is determined by the synchronization determination circuit 1701 from a state in which synchronization is not established, phase rotation detection according to the present invention is started (DETECTION TIMING CHANGE in FIG.22).

In FIG.22, in detection period n the average SIR is measured by the SIR measuring device 1501, and the average SIR and SIR threshold value are compared in the switching control circuit 1502. In detection period n, a state continues in which the average SIR is lower than the SIR threshold value. That is to say, at the end point of detection period n, the average SIR is lower than the SIR threshold value. Therefore, the switching control circuit 1502 discards the phase rotation detection result for this detection period, performs default setting and outputs a preset value. Similarly, the switching control circuit 1502 also performs default setting and outputs a preset value for detection period n+1 in FIG.22.

Thus, according to this embodiment, when communication quality is poor a phase rotation detection result whose precision is assumed to be low is not used, thereby making it possible to prevent compensation from being performed based on low-precision phase rotation detection results, and when communication has not been acquired a phase rotation detection result whose precision is assumed to be low is not used, thereby making it possible to prevent compensation from being performed based on low-precision phase rotation detection results. By this means it is possible to prevent deterioration of reception characteristics.

In this embodiment, a case has been described where determination of whether communication quality is good or bad is based on the reception SIR, but in the present invention a parameter other than reception SIR may also be used for communication quality.

Also, control in a state in which synchronization has not been established can also be applied in a case where synchronization is lost for some reason during communication, in the same way as at the start of communication. In such cases it is necessary for phase rotation to be pulled in rapidly from the state in which synchronization has not been established, and therefore the phase rotation detection period may be shortened-for example, to 1/3 the usual phase rotation detection period.

In this embodiment, a case has been described where synchronization determination is performed using the bit error rate of the pilot part or similar DPCCH data, but another synchronization determination method may be used with the present invention.

(Embodiment 11)

In this embodiment, a case is described where the phase rotation detection result of the previous detection period is retained, and when reception quality is low, that phase rotation detection result of the previous detection period is used.

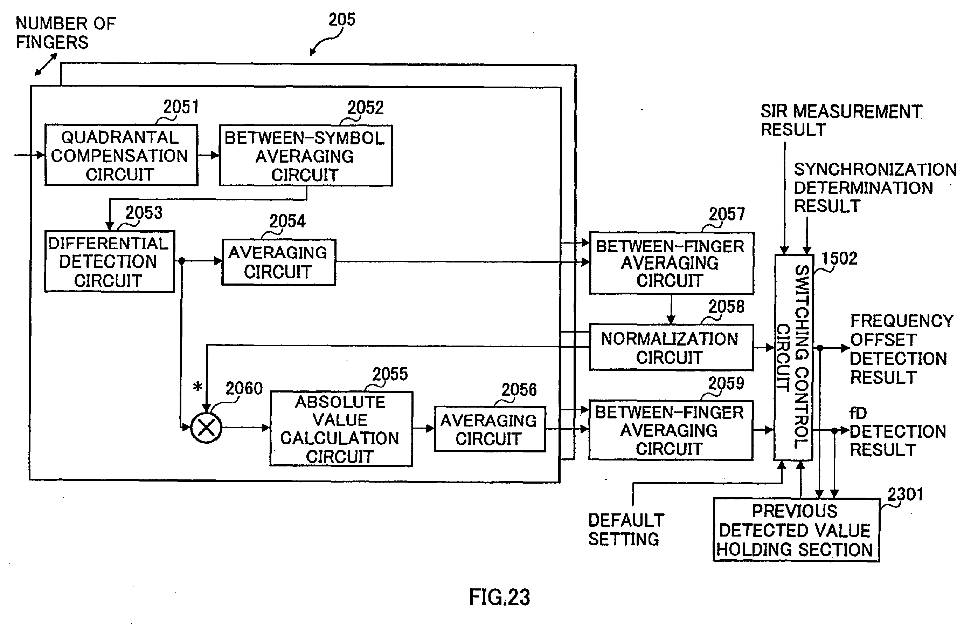

FIG.23 is a block diagram showing an example of the configuration of a phase rotation detection circuit according to Embodiment 11 of the present invention. Parts in FIG.23 identical to those in FIG.20 are assigned the same codes as in FIG.20 and their detailed explanations are omitted.

The phase rotation detection circuit shown in FIG.23 is provided with a switching control circuit 1502 that switches the output of frequency offset detection results from a normalization circuit 2058 and fD detection results from a between-finger averaging circuit 2059, and a previous detected value holding section 2301 that holds the phase rotation detection result detected in the previous detection period. The reception SIR that is the SIR measurement result is output from an SIR measuring device 1501 to this switching control circuit 1502, and the synchronization determination result is also output from a synchronization determination circuit 1701 to this switching control circuit 1502.

Next, the operation of a base station provided with a phase rotation detection circuit that has the above configuration will be described.

In correlator 105, the result of executing despreading processing on a signal that has undergone radio reception processing is output to channel estimation circuits 1072 and 1082 of coherent detection circuits 107 and 108, and is also output to the SIR measuring device 1501. The SIR measuring device 1501 performs SIR measurement using the pilot part within the received signal. To be specific, reception SIR averaging is performed in the phase rotation detection period.

Then, the averaged reception SIR is output to channel estimation circuits 1072 and 1082 of coherent detection circuits 107 and 108. To be specific, the averaged reception SIR (SIR measurement result) is output to the switching control circuit 1502 of channel estimation circuits 1072 and 1082.

On the other hand, outputs that have undergone coherent detection by coherent detection circuit 107 and coherent detection circuit 108 using correlator 104 and 105 outputs, respectively, are RAKE-combined, and the RAKE-combined signal is output to a demodulation circuit 110. The demodulation circuit 110 performs demodulation processing on the RAKE-combined signal and obtains receive data. This receive data is output to the synchronization determination circuit 1701.

The synchronization determination circuit 1701 performs threshold value determination on the bit error rate of the pilot part or similar DPCCH data, and determines whether or not synchronization has been acquired. Then this synchronization determination result is output to the switching control circuit 1502 of channel estimation circuits 1072 and 1082.

The switching control circuit 1502 performs threshold value determination on the averaged reception SIR, and performs switching as to whether or not the outputs of a normalization circuit 2058 and between-finger averaging circuit 2059 (frequency offset detection result and fD detection result) are to be output directly.

That is to say, when the averaged reception SIR is higher than a threshold value (when communication quality is good), the frequency offset detection result and fD detection result obtained in the detection period of phase rotation detection according to the present invention are output directly. On the other hand, when the averaged reception SIR is lower than the threshold value (when communication quality is poor), the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

Also, the switching control circuit 1502 performs switching as to whether or not the outputs of the normalization circuit 2058 and between-finger averaging circuit 2059 (frequency offset detection result and fD detection result) are to be output directly, in accordance with the synchronization determination result.

That is to say, when the synchronization determination result indicates that synchronization has been established, the frequency offset detection result and fD detection result obtained in the detection period of phase rotation detection according to the present invention are output directly. On the other hand, when the synchronization determination result indicates that synchronization has not been established, the frequency offset detection result and fD detection result obtained in the detection period of phase rotation detection according to the present invention are discarded, and the frequency offset detection result and fD detection result are set to preset values. As preset values, 0 Hz may be used, for example, for the frequency offset, and medium speed-that is, the phase rotation detection default value-for fD.

When reception quality is good (when the average SIR exceeds the threshold value) or when synchronization is established, the frequency offset detection result and fD detection result obtained by phase rotation detection according to the present invention are output directly. This frequency offset detection result and fD detection result are held in the previous detected value holding section 2301. Then, if reception quality deteriorates during the detection period ( if the average SIR falls to or below the threshold value in Embodiment 10), the frequency offset detection result and fD detection result are set to preset values as default settings.

As phase rotation itself can be considered not to vary greatly within one detection period, when reception quality deteriorates the switching control circuit 1502 performs control so that default settings are not made and the frequency offset detection result and fD detection result for the previous detection period held in the previous detected value holding section 2301 are output.

That is to say, if reception quality measured in a phase rotation period has deteriorated, the phase rotation detection result measured in that detection period is not used but discarded, and the detection result for the previous detection period is used (the current detection result and previous detection result are made the same). In this case, precision will fall if a detection result from an excessively earlier detection period is used, so it is desirable to use the detection result for the immediately preceding detection period. If reception quality is poor in the next detection period as well, preset values for the phase rotation detected values are used.

Thus, according to this embodiment, as a countermeasure to deterioration of detection precision when synchronization is not established or when reception quality is poor, control is performed so that, instead of performing compensation using the detection result, the previous detection result is used, thereby making it possible to reduce the effects of detection error and prevent deterioration of reception characteristics.

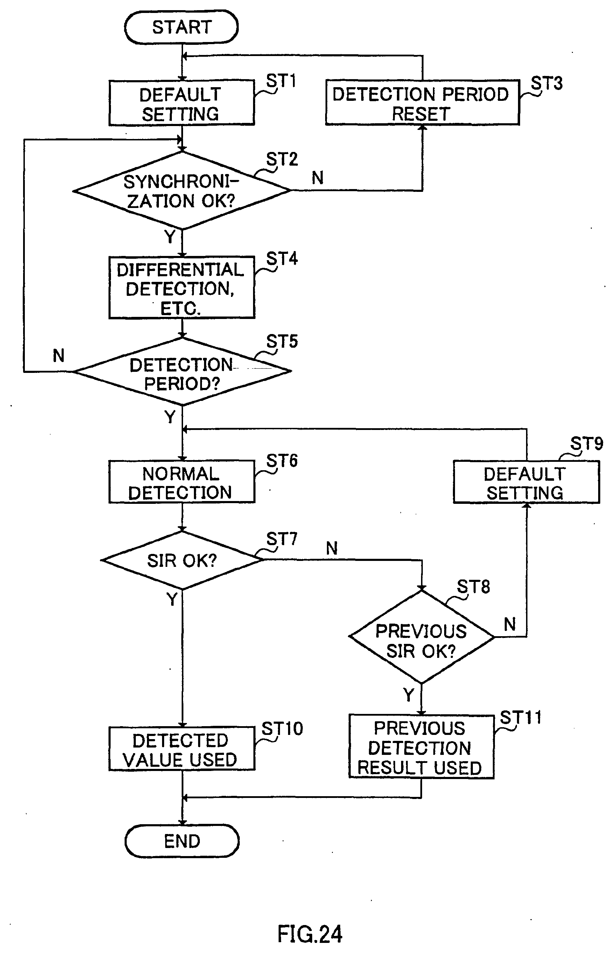

Phase rotation detection and default setting switching control of the present invention according to this embodiment are described below using FIG.24. FIG.24 is a flowchart for explaining switching control of phase rotation detection according to Embodiment 11 of the present invention.

First, in Step (hereinafter abbreviated to "ST") 1, the switching control circuit 1502 is set to defaults (frequency offset: 0 Hz, fD determination: "medium" (3 slots for WMSA (Weighted Multi-Symbol Averaging)). In ST2, the synchronization determination circuit 1701 determines whether or not synchronization is established. If synchronization is established, predetermined processing such as differential detection is performed (ST4); if synchronization is not established, the phase rotation detection circuit 205 is instructed to perform a detection period reset (ST3), and the switching control circuit 1502 default setting state is maintained.

Next, in ST5, after synchronization has been established it is determined whether or not this is a detection period, and 60-frame phase rotation detection processing is performed. That is to say, in the case of a detection period after synchronization establishment, normal every-60-frames detection is continued (ST6). If reception quality deteriorates while normal detection is being performed, the average SIR and a threshold value are compared (ST7). If the average SIR exceeds the threshold value, reception quality is determined to be good, and the detected value is used (ST10).

If the average SIR is at or below the threshold value, the previous average SIR and the threshold value are compared (ST8). If the previous average SIR exceeds the threshold value, reception quality is determined to be good, and the previous detection result held in the previous detected value holding section 2301 is used (ST11). On the other hand, if the previous average SIR is at or below the threshold value, default setting is performed (ST9). That is to say, when the average SIR is lower than the threshold value, the detection result for that detection period n is discarded and the result for the previous detection period n-1 is also used for the next detection period n+1. Furthermore, if the average SIR remains lower than the threshold value, default settings are used from the next detection period n+2 onward. After returning to default setting, normal detection operation (ST6) is performed.

Thus, at each point in time, the detection result is used if the average SIR exceeds the threshold value, and default settings are used if the average SIR is at or below the threshold value. There is no limit on the number of frames in a detection period in this embodiment, and a number of frames other than 60 may be used. There are also no restrictions in this embodiment on control for using either a previous detection result or a preset value.

In this embodiment, a case has been described where phase rotation detection according to the present invention is performed irrespective of whether or not synchronization has been established, and when synchronization has not been established the phase rotation detection result is not used and the previous detected value is used instead, but control may also be performed so that phase rotation detection according to the present invention is not performed when synchronization is not established.

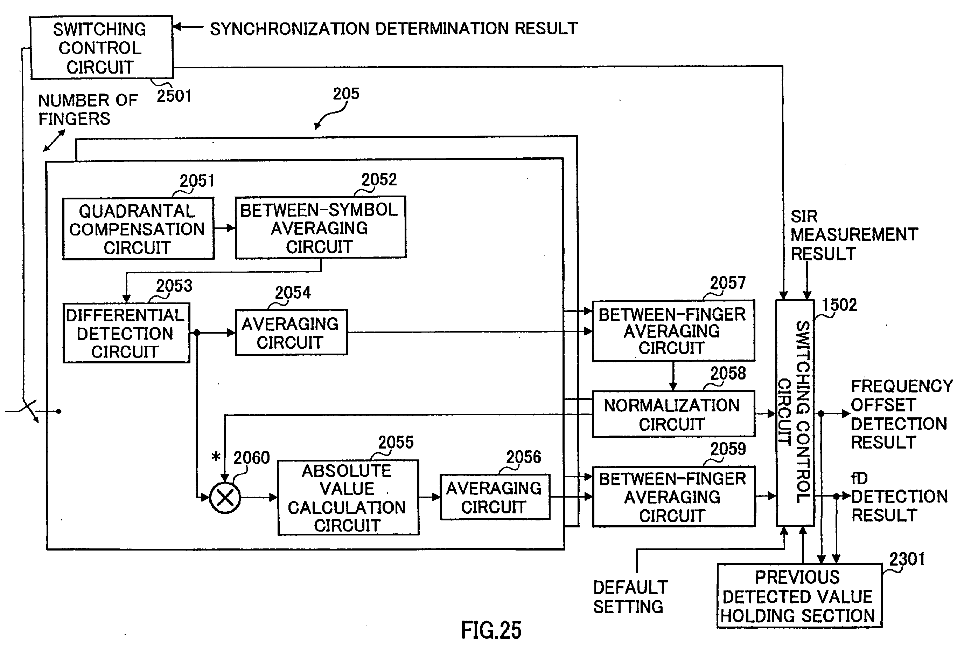

FIG.25 is a block diagram showing another example of the configuration of a phase rotation detection circuit according to Embodiment 11 of the present invention. Parts in FIG.25 identical to those in FIG.23 are assigned the same codes as in FIG.23 and their detailed explanations are omitted.

The phase rotation detection circuit shown in FIG.25 is provided with a switching control circuit 2501 that controls starting and stopping of phase rotation detection according to the present invention. Into this switching control circuit 2501 is input the synchronization determination result that is the output of a synchronization determination circuit 1701. Switching control circuit 2501 controls starting and stopping of phase rotation detection according to the present invention based on the synchronization determination result. Switching control circuit 2501 also outputs a signal indicating starting or stopping of phase rotation detection to a switching control circuit 1502 that outputs the frequency offset detection result and fD detection result.

In a phase rotation detection circuit that has the above-described configuration, when the synchronization determination result is that synchronization is not established, switching control is performed so that phase rotation detection according to the present invention stops, and a signal indicating that phase rotation detection is to be stopped is output to switching control circuit 1502. In accordance with the signal indicating that phase rotation detection is to be stopped, switching control circuit 1502 performs switching control as to whether the detection result for the previous detection period held in a previous detected value holding section 2301 is to be output, or preset values are to be output in accordance with default settings. The same method as described above is used for control as to whether the detection result for the previous detection period held is output or preset values are output.

When the synchronization determination result is that synchronization is established, switching control is performed so that phase rotation detection according to the present invention is performed, and a signal indicating that phase rotation detection is to be started is output to switching control circuit 1502. In accordance with the signal indicating that phase rotation detection is to be started, switching control circuit 1502 outputs the frequency offset detection result that is the output of a normalization circuit 2058 and the fD detection result that is the output of a between-finger averaging circuit 2059.

By performing control in this way so that phase rotation detection according to the present invention is not performed when synchronization is not established, it is possible to prevent compensation from being performed based on phase rotation detection results with poor precision, and reception characteristics from deteriorating, and it is also possible to reduce the amount of signal processing related to reception and to reduce power consumption.

It is possible for above Embodiments 1 through 11 to be implemented by being combined as appropriate.

Also, the present invention is not limited to the above embodiments, and can be implemented with various modifications. In above Embodiments 1 through 11, a case is described where phase rotation detection results obtained by phase rotation detection according to the present invention are used in channel estimation, but in the present invention, phase rotation detection results obtained by phase rotation detection according to the present invention may also be used in other signal processing-for example, in optimization of the number of delay profile averaging operations or the like.

A phase rotation detection apparatus of the present invention has a configuration provided with a despreading section that performs despreading processing on a received signal and obtains a despread signal, a differential detection section that performs differential detection using the despread signal, and a frequency offset detection section that detects phase rotation due to frequency offset by performing vector combining of differential detection output obtained by means of the differential detection.

A phase rotation detection apparatus of the present invention has a configuration provided with a despreading section that performs despreading processing on a received signal and obtains a despread signal, a differential detection section that performs differential detection using the despread signal, and a maximum Doppler frequency detection section that detects phase rotation due to a maximum Doppler frequency by performing vector combining of differential detection output obtained by means of the differential detection.

A phase rotation detection apparatus of the present invention has a configuration provided with a despreading section that performs despreading processing on a received signal and obtains a despread signal, a differential detection section that performs differential detection using the despread signal, a frequency offset detection section that detects phase rotation due to frequency offset by performing vector combining of differential detection output obtained by means of the differential detection, and a maximum Doppler frequency detection section that detects phase rotation due to a maximum Doppler frequency by performing vector combining of differential detection output compensated using the phase rotation due to frequency offset.

According to these configurations, differential detection output that affects reliability in phase rotation detection is used, and therefore channel estimation precision can be improved.

A phase rotation detection apparatus of the present invention has a configuration whereby, in the above configuration, the maximum Doppler frequency detection section performs vector combining of quadrature component absolute values of differential detection output compensated using phase rotation due to frequency offset.

According to this configuration, a maximum Doppler frequency can be detected accurately even if averaging is performed of phase rotation due to a Doppler frequency whose direction of rotation is not uniform.

A phase rotation detection apparatus of the present invention has a configuration whereby, in the above configuration, vector combining of quadrature component absolute values is performed only for differential detection output with high reliability.

According to this configuration, a maximum Doppler frequency can be detected accurately even when noise is high because differential detection output with low reliability is not used in detection.

A phase rotation detection apparatus of the present invention has a configuration whereby, in the above configuration, the differential detection section has a plurality of differential detection sections whose measurement intervals are different.

A phase rotation detection apparatus of the present invention has a configuration whereby, in the above configuration, the differential detection section selects the optimal differential detection output from differential detection outputs from the plurality of differential detection sections based on a table showing the relationship between phase rotation amounts and differential detection output values.

A phase rotation detection apparatus of the present invention has a configuration whereby, in the above configuration, the differential detection section switches the operation of the plurality of differential detection sections based on the phase rotation amount of a specific differential detection section among the plurality of differential detection sections.

According to these configurations, it is possible to select the optimal differential detection output in phase rotation detection, and therefore it is possible to prevent the effects of noise and detect phase rotation reliably.

A phase rotation detection apparatus of the present invention has a configuration whereby, in the above configuration, threshold value determination is performed on differential detection output, and phase rotation detection is performed using only output with high reliability.

A phase rotation detection apparatus of the present invention has a configuration whereby, in the above configuration, threshold value determination is performed on differential detection output after frequency offset compensation, and phase rotation detection is performed using only output with high reliability.

A phase rotation detection apparatus of the present invention has a configuration whereby, in the above configuration, a selection section is provided that selects the maximum output from frequency offset compensated outputs obtained in phase rotation detection performed between fingers respectively, and phase rotation due to a maximum Doppler frequency is detected using that maximum output.

A phase rotation detection apparatus of the present invention has a configuration whereby, in the above configuration, a threshold value determination section is provided that performs threshold value determination on the maximum output.

A phase rotation detection apparatus of the present invention has a configuration whereby, in the above configuration, the maximum Doppler frequency detection section refers to a determination table that relates communication quality to maximum Doppler frequency and detects phase rotation due to a maximum Doppler frequency.

According to these configurations, differential detection output whose level is low-that is, whose reliability is low-is eliminated and phase rotation detection is performed using only differential detection output with high reliability, as a result of which detection precision can be improved.

A radio base station apparatus of the present invention is provided with an above-described phase rotation detection apparatus. By this means, channel estimation precision is improved and reception characteristics are improved.

A radio base station apparatus of the present invention has a configuration provided with a phase rotation detection apparatus that performs phase rotation detection on a received signal, a reception quality measurement section that measures reception quality using the received signal, and a first switching control section that performs switching as to whether or not a result detected by the phase rotation detection apparatus is to be output in accordance with the reception quality; wherein the phase rotation detection apparatus is provided with a despreading section that performs despreading processing on a received signal and obtains a despread signal, a differential detection section that performs differential detection using the despread signal, a frequency offset detection section that detects phase rotation due to frequency offset by performing vector combining of differential detection output obtained by means of the differential detection, and a maximum Doppler frequency detection section that detects phase rotation due to a maximum Doppler frequency by performing vector combining of differential detection output compensated using the phase rotation due to frequency offset.

According to this configuration, when communication quality is poor a phase rotation detection result whose precision is assumed to be low is not used, thereby making it possible to prevent compensation from being performed based on low-precision phase rotation detection results, and to prevent deterioration of reception characteristics.

A radio base station apparatus of the present invention has a configuration provided with a phase rotation detection apparatus that performs phase rotation detection on a received signal, a demodulation section that performs demodulation processing on the received signal, a synchronization determination section that performs synchronization determination using the output of the demodulation section, and a first switching control section that performs switching as to whether or not a result detected by the phase rotation detection apparatus is to be output in accordance with the synchronization determination result; wherein the phase rotation detection apparatus is provided with a despreading section that performs despreading processing on a received signal and obtains a despread signal, a differential detection section that performs differential detection using the despread signal, a frequency offset detection section that detects phase rotation due to frequency offset by performing vector combining of differential detection output obtained by means of the differential detection, and a maximum Doppler frequency detection section that detects phase rotation due to a maximum Doppler frequency by performing vector combining of differential detection output compensated using the phase rotation due to frequency offset.

According to this configuration, when synchronization has not been acquired a phase rotation detection result whose precision is assumed to be low is not used, thereby making it possible to prevent compensation from being performed based on low-precision phase rotation detection results, and to prevent deterioration of reception characteristics.

A radio base station apparatus of the present invention has a configuration provided with a phase rotation detection apparatus that performs phase rotation detection on a received signal, a reception quality measurement section that measures reception quality using the received signal, a demodulation section that performs demodulation processing on the received signal, a synchronization determination section that performs synchronization determination using the output of the demodulation section, and a first switching control section that performs switching as to whether or not a result detected by the phase rotation detection apparatus is to be output in accordance with the reception quality and the synchronization determination result; wherein the phase rotation detection apparatus is provided with a despreading section that performs despreading processing on a received signal and obtains a despread signal, a differential detection section that performs differential detection using the despread signal, a frequency offset detection section that detects phase rotation due to frequency offset by performing vector combining of differential detection output obtained by means of the differential detection, and a maximum Doppler frequency detection section that detects phase rotation due to a maximum Doppler frequency by performing vector combining of differential detection output compensated using the phase rotation due to frequency offset.

According to this configuration, when communication quality is poor a phase rotation detection result whose precision is assumed to be low is not used, thereby making it possible to prevent compensation from being performed based on low-precision phase rotation detection results, and when communication has not been acquired a phase rotation detection result whose precision is assumed to be low is not used, thereby making it possible to prevent compensation from being performed based on low-precision phase rotation detection results. By this means it is possible to prevent deterioration of reception characteristics.

A radio base station apparatus of the present invention has a configuration whereby, in the above configuration, the first switching control section performs control so that when reception quality is good the result detected by the phase rotation detection apparatus is output, and when reception quality is poor a preset value is output.

A radio base station apparatus of the present invention has a configuration whereby, in the above configuration, the first switching control section performs control so that when synchronization is established the result detected by the phase rotation detection apparatus is output, and when synchronization is not established a preset value is output.

A radio base station apparatus of the present invention has a configuration whereby, in the above configuration, the phase rotation detection apparatus makes the phase rotation detection period shorter than normal in a specific environment. By this means, it is possible to perform synchronization establishment rapidly from a state in which synchronization has not been established or synchronization has been lost.

A radio base station apparatus of the present invention has a configuration whereby, in the above configuration, the phase rotation detection apparatus is provided with a holding section that holds a previous phase rotation detection result; wherein the first switching control section performs control so that the previous phase rotation detection result held in the holding section is output instead of a preset value.

According to this configuration, as a countermeasure to deterioration of detection precision in a state in which synchronization is not established or in a state in which reception quality is poor, control is performed so that, instead of performing compensation using the detection result, the previous detection result is used, thereby making it possible to reduce the effects of detection error and prevent deterioration of reception characteristics.

A radio base station apparatus of the present invention has a configuration whereby, in the above configuration, a second switching control section is provided that controls starting and stopping of phase rotation detection.

According to this configuration, it is possible to prevent compensation from being performed based on phase rotation detection results with poor precision, and reception characteristics from deteriorating, and it is also possible to reduce the amount of signal processing related to reception and to reduce power consumption.

A phase rotation detection method of the present invention includes a despreading step of performing despreading processing on a received signal and obtaining a despread signal, a delay detecting step of performing differential detection using the despread signal, a frequency offset detecting step of detecting phase rotation due to frequency offset by performing vector combining of differential detection output obtained by means of the differential detection, and a maximum Doppler frequency detecting step of detecting phase rotation due to a maximum Doppler frequency by performing vector combining of differential detection output compensated using the phase rotation due to frequency offset.

According to this method, differential detection output that affects reliability in phase rotation detection is used, and therefore channel estimation precision can be improved.

As described above, according to the present invention, when the frequency offset component and fading fluctuation component of phase rotation are detected separately from a known signal included in a received signal, the reliability of the received signal is taken into consideration by performing vector combining of differential detection output, and the maximum Doppler frequency is detected using differential detection output after frequency offset compensation has been performed, thereby enabling a high level of detection precision to be achieved.

This application is based on Japanese Patent Application No.2000-267532 filed on September 4, 2000, and Japanese Patent Application No.2001-45710 filed on February 21, 2001, entire content of which is expressly incorporated by reference herein.

Industrial Applicability

The present invention is applicable to a phase rotation detection apparatus and a radio base station apparatus provided therewith used in a digital radio communication system, and more particularly in a CDMA (Code Division Multiple Access) system.

**Claims**

1. A phase rotation detection apparatus comprising:

   despreading means for performing despreading processing on a received signal and obtaining a despread signal;
   delay detecting means for performing differential detection using said despread signal; and
   frequency offset detecting means for detecting phase rotation due to carrier frequency offset by performing vector combining of differential detection output obtained by means of said differential detection.

2. A phase rotation detection apparatus comprising:

   despreading means for performing despreading processing on a received signal and obtaining a despread signal;
   delay detecting means for performing differential detection using said despread signal; and
   maximum Doppler frequency detecting means for detecting phase rotation due to a maximum Doppler frequency by performing vector combining of differential detection output obtained by means of said differential detection.

3. A phase rotation detection apparatus comprising:

despreading means for performing despreading processing on a received signal and obtaining a despread signal;

delay detecting means for performing differential detection using said despread signal;

frequency offset detecting means for detecting phase rotation due to frequency offset by performing vector combining of differential detection output obtained by means of said differential detection; and

maximum Doppler frequency detecting means for detecting phase rotation due to a maximum Doppler frequency by performing vector combining of differential detection output compensated using said phase rotation due-to frequency offset.

4. The phase rotation detection apparatus according to claim 2, wherein said maximum Doppler frequency detecting means performs vector combining of quadrature component absolute values of differential detection output compensated using phase rotation due to frequency offset.

5. The phase rotation detection apparatus according to claim 4, wherein vector combining of quadrature component absolute values is performed only for differential detection output with high reliability.

6. The phase rotation detection apparatus according to claim 1, wherein said delay detecting means has a plurality of differential detection sections whose measurement intervals are different.

7. The phase rotation detection apparatus according to claim 6, wherein said delay detecting means selects an optimal differential detection output from differential detection outputs from said plurality of differential detection sections based on differential detection output values from said plurality of differential detection sections.

8. The phase rotation detection apparatus according to claim 6, wherein said delay detecting means switches operation of said plurality of differential detection sections based on a phase rotation amount of a specific differential detection section among said plurality of differential detection sections.

9. The phase rotation detection apparatus according to claim 1, wherein threshold value determination is performed on differential detection output, and phase rotation detection is performed using only output with high reliability.

10. The phase rotation detection apparatus according to claim 3, wherein threshold value determination is performed on differential detection output after frequency offset compensation, and phase rotation detection is performed using only output with high reliability.

11. The phase rotation detection apparatus according to claim 3, further comprising selecting means for selecting a maximum output among differential detection outputs after frequency offset compensation outputs obtained in phase rotation detection performed between fingers respectively;

wherein phase rotation due to a maximum Doppler frequency is detected using said maximum output.

12. The phase rotation detection apparatus according to claim 11, further comprising threshold value determining means for performing threshold value determination on said maximum output.

13. The phase rotation detection apparatus according to claim 3, wherein said maximum Doppler frequency detecting means refers to a determination table that relates communication quality to maximum Doppler frequency and detects phase rotation due to a maximum Doppler frequency.

14. A radio base station apparatus provided with a phase rotation detection apparatus, said phase rotation detection apparatus comprising:

despreading means for performing despreading processing on a received signal and obtaining a despread signal;

delay detecting means for performing differential detection using said despread signal; and

frequency offset detecting means for detecting phase rotation due to carrier frequency offset by performing vector combining of differential detection output obtained by means of said differential detection.

15. A radio base station apparatus comprising:

a phase rotation detection apparatus that performs phase rotation detection on a received signal;

reception quality measuring means for measuring reception quality using said received signal; and
first switching control means for performing switching as to whether or not a result detected by said phase
rotation detection apparatus is to be output in accordance with said reception quality;

wherein said phase rotation detection apparatus is provided with:

despreading means for performing despreading processing on a received signal and obtaining a despread
signal;
delay detecting means for performing differential detection using said despread signal;
frequency offset detecting means for detecting phase rotation due to frequency offset by performing vector
combining of differential detection output obtained by means of said differential detection; and
maximum Doppler frequency detecting means for detecting phase rotation due to a maximum Doppler frequency by performing vector combining of differential detection output compensated using said phase rotation
due to frequency offset.

**16.** A radio base station apparatus comprising:

a phase rotation detection apparatus that performs phase rotation detection on a received signal:

demodulating means for performing demodulation processing on said received signal;
synchronization determining means for performing synchronization determination using output of said
demodulating means; and
first switching control means for performing switching as to whether or not a result detected by said phase
rotation detection apparatus is to be output in accordance with a result of said synchronization determination;

wherein said phase rotation detection apparatus is provided with:

despreading means for performing despreading processing on a received signal and obtaining a despread
signal;
delay detecting means for performing differential detection using said despread signal;
frequency offset detecting means for detecting phase rotation due to frequency offset by performing vector
combining of differential detection output obtained by means of said differential detection; and
maximum Doppler frequency detecting means for detecting phase rotation due to a maximum Doppler frequency by performing vector combining of differential detection output compensated using said phase rotation
due to frequency offset.

**17.** A radio base station apparatus comprising:

a phase rotation detection apparatus that performs phase rotation detection on a received signal;
reception quality measuring means for measuring reception quality using said received signal;
demodulating means for performing demodulation processing on said received signal;
synchronization determining means for performing synchronization determination using output of said demodulating means; and
first switching control means for performing switching as to whether or not a result detected by said phase
rotation detection apparatus is to be output in accordance with said reception quality and a result of said
synchronization determination;

wherein said phase rotation detection apparatus is provided with:

despreading means for performing despreading processing on a received signal and obtaining a despread
signal;
delay detecting means for performing differential detection using said despread signal;
frequency offset detecting means for detecting phase rotation due to frequency offset by performing vector
combining of differential detection output obtained by means of said differential detection; and
maximum Doppler frequency detecting means for detecting phase rotation due to a maximum Doppler frequency by performing vector combining of differential detection output compensated using said phase rotation
due to frequency offset.

**18.** The radio base station apparatus according to claim 15, wherein said first switching control means performs control so that when reception quality is good a result detected by said phase rotation detection apparatus is output, and when reception quality is poor a preset value is output.

**19.** The radio base station apparatus according to claim 16, wherein said first switching control means performs control so that when synchronization is established a result detected by said phase rotation detection apparatus is output, and when synchronization is not established a preset value is output.

**20.** The radio base station apparatus according to claim 16, wherein said phase rotation detection apparatus makes a phase rotation detection period shorter than normal in a specific environment.

**21.** The radio base station apparatus according to claim 18, wherein:

said phase rotation detection apparatus is further with provided with holding means for holding a previous phase rotation detection result; and
said first switching control means performs control so that a previous phase rotation detection result held by said holding means is output instead of a preset value.

**22.** The radio base station apparatus according to claim 15, further comprising second switching control means for controlling starting and stopping of phase rotation detection.

**23.** A phase rotation detection method comprising:

a despreading step of performing despreading processing on a received signal and obtaining a despread signal;
a delay detecting step of performing differential detection using said despread signal;
a frequency offset detecting step of detecting phase rotation due to frequency offset by performing vector combining of differential detection output obtained by means of said differential detection; and
a maximum Doppler frequency detecting step of detecting phase rotation due to a maximum Doppler frequency by performing vector combining of differential detection output compensated using said phase rotation due to frequency offset.

FIG.1

EP 1 233 535 A1

FIG.2

EP 1 233 535 A1

NUMBER OF
FINGERS

205

```
                    2051                    2052
              ┌──────────────┐      ┌──────────────┐
              │  QUADRANTAL  │      │BETWEEN-SYMBOL│
         ────▶│ COMPENSATION │─────▶│  AVERAGING   │
              │   CIRCUIT    │      │   CIRCUIT    │
              └──────────────┘      └──────────────┘
                      │                    │
                    2053                  2054
              ┌──────────────┐      ┌──────────────┐        2057
              │ DIFFERENTIAL │      │              │   ┌──────────────┐
              │  DETECTION   │─────▶│  AVERAGING   │──▶│BETWEEN-FINGER│
              │   CIRCUIT    │  •   │   CIRCUIT    │   │  AVERAGING   │
              └──────────────┘      └──────────────┘   │   CIRCUIT    │
                                                       └──────────────┘
                                                              │  2058
                                                       ┌──────────────┐
                                                       │NORMALIZATION │
                                                       │   CIRCUIT    │
                                                       └──────────────┘
            * 2060   2055                2056              2059
            ┌──┐  ┌──────────┐      ┌──────────┐   ┌──────────────┐
            │⊗ │─▶│ ABSOLUTE │      │          │   │BETWEEN-FINGER│
            └──┘  │  VALUE   │─────▶│AVERAGING │──▶│  AVERAGING   │
                  │CALCULATION│      │ CIRCUIT  │   │   CIRCUIT    │
                  │  CIRCUIT │      └──────────┘   └──────────────┘
                  └──────────┘
```

FREQUENCY
OFFSET
DETECTION
RESULT

fD
DETECTION
RESULT

FIG.3

FIG.4

EP 1 233 535 A1

## FIG.5

1 SLOT

DPDCH

DPCCH | PL | PL | PL

0.3 SLOT

1 SLOT

2 SLOTS

## FIG.6

2053

0.3-SLOT DIFFERENTIAL DETECTION CIRCUIT  401

1-SLOT DIFFERENTIAL DETECTION CIRCUIT  402

2-SLOT DIFFERENTIAL DETECTION CIRCUIT  403

COMPARISON SECTION  404

REFERENCE TABLE  405

DIFFERENTIAL DETECTION OUTPUT

| | DIFFERENTIAL DETECTION OUTPUT VALUE | | |
| --- | --- | --- | --- |
| | TIME INTERVAL | | |
| PHASE ROTATION AMOUNT | 0.3 SLOT | 1 SLOT | 2 SLOTS |
| ... | ... | | |
| a1 | x1 | y1 | z1 |
| a2 | x2 | y2 | z2 |
| a3 | x3 | y3 | z3 |
| ... | ... | | |
| | | | |

FIG.7

FIG.8

FIG.9

NUMBER OF FINGERS

205

**2051** QUADRANTAL COMPENSATION CIRCUIT

**2052** BETWEEN-SYMBOL AVERAGING CIRCUIT

**2053** DIFFERENTIAL DETECTION CIRCUIT

**2054** AVERAGING CIRCUIT

**2057** BETWEEN-FINGER AVERAGING CIRCUIT

**2058** NORMALIZATION CIRCUIT

FREQUENCY OFFSET DETECTION RESULT

*

**2060** ⊗

**601** THRESHOLD VALUE DETERMINATION CIRCUIT

**2055** ABSOLUTE VALUE CALCULATION CIRCUIT

**2056** AVERAGING CIRCUIT

**2059** BETWEEN-FINGER AVERAGING CIRCUIT

fD DETECTION RESULT

DIFFERENTIAL DETECTION OUTPUT SELECTION THRESHOLD VALUE

FIG.10

FIG.11

205

NUMBER OF FINGERS

2051 QUADRANTAL COMPENSATION CIRCUIT

2052 BETWEEN-SYMBOL AVERAGING CIRCUIT

2057 BETWEEN-FINGER AVERAGING CIRCUIT

2058 NORMALIZATION CIRCUIT

FREQUENCY OFFSET DETECTION RESULT

2053 DIFFERENTIAL DETECTION CIRCUIT

2054 AVERAGING CIRCUIT

2060 *

701 MAXIMUM VALUE SELECTION CIRCUIT

2055 ABSOLUTE VALUE CALCULATION CIRCUIT

2056 AVERAGING CIRCUIT

fD DETECTION RESULT

NUMBER OF
FINGERS

205

QUADRANTAL
COMPENSATION
CIRCUIT
2051

BETWEEN-SYMBOL
AVERAGING
CIRCUIT
2052

DIFFERENTIAL
DETECTION
CIRCUIT
2053

AVERAGING
CIRCUIT
2054

BETWEEN-FINGER
AVERAGING
CIRCUIT
2057

*

⊗ 2060

NORMALIZATION
CIRCUIT
2058

FREQUENCY
OFFSET
DETECTION
RESULT

MAXIMUM
VALUE
SELECTION
CIRCUIT
701

THRESHOLD
VALUE
DETERMINATION
CIRCUIT
702

ABSOLUTE
VALUE
CALCULATION
CIRCUIT
2055

AVERAGING
CIRCUIT
2056

fD
DETECTION
RESULT

DIFFERENTIAL DETECTION
OUTPUT SELECTION
THRESHOLD VALUE

FIG.12

FIG.13

EP 1 233 535 A1

FIG.14

FIG.15

NUMBER OF
FINGERS

205

| 2051 | 2052 |
|------|------|
| QUADRANTAL COMPENSATION CIRCUIT | BETWEEN-SYMBOL AVERAGING CIRCUIT |

SIR MEASUREMENT
RESULT

2053

DIFFERENTIAL
DETECTION
CIRCUIT

2054

AVERAGING
CIRCUIT

2057

BETWEEN-FINGER
AVERAGING
CIRCUIT

1502

SWITCHING CONTROL CIRCUIT

2058

NORMALIZATION
CIRCUIT

FREQUENCY
OFFSET
DETECTION
RESULT

*  2060     2055

⊗

ABSOLUTE
VALUE
CALCULATION
CIRCUIT

2056

AVERAGING
CIRCUIT

2059

BETWEEN-FINGER
AVERAGING
CIRCUIT

fD
DETECTION
RESULT

DEFAULT
SETTING

FIG.16

FIG.17

EP 1 233 535 A1

NUMBER OF
FINGERS

205

QUADRANTAL
COMPENSATION
CIRCUIT
2051

BETWEEN-SYMBOL
AVERAGING
CIRCUIT
2052

DIFFERENTIAL
DETECTION
CIRCUIT
2053

AVERAGING
CIRCUIT
2054

BETWEEN-FINGER
AVERAGING
CIRCUIT
2057

SYNCHRONIZATION
DETERMINATION
RESULT

SWITCHING CONTROL CIRCUIT
1502

NORMALIZATION
CIRCUIT
2058

FREQUENCY
OFFSET
DETECTION
RESULT

*
2060

ABSOLUTE
VALUE
CALCULATION
CIRCUIT
2055

AVERAGING
CIRCUIT
2056

BETWEEN-FINGER
AVERAGING
CIRCUIT
2059

fD
DETECTION
RESULT

DEFAULT
SETTING

FIG.18

FIG.19

NUMBER OF
FINGERS

2051

QUADRANTAL
COMPENSATION
CIRCUIT

2052

BETWEEN-SYMBOL
AVERAGING
CIRCUIT

SIR MEASUREMENT
RESULT

SYNCHRONIZATION
DETERMINATION
RESULT

2053

DIFFERENTIAL
DETECTION
CIRCUIT

2054

AVERAGING
CIRCUIT

2057

BETWEEN-FINGER
AVERAGING
CIRCUIT

SWITCHING CONTROL CIRCUIT

1502

FREQUENCY
OFFSET
DETECTION
RESULT

2058

NORMALIZATION
CIRCUIT

*  2060

⊗

2055

ABSOLUTE
VALUE
CALCULATION
CIRCUIT

2056

AVERAGING
CIRCUIT

2059

BETWEEN-FINGER
AVERAGING
CIRCUIT

fD
DETECTION
RESULT

DEFAULT
SETTING

FIG.20

EP 1 233 535 A1

IN SYNC

OUT OF
SYNC

DETECTION TIMING CHANGE

DETECTION
PERIOD

n          n+1          n+2

t

AVERAGE SIR

SIR
THRESHOLD
VALUE

DETECTION
PERIOD

n          n+1

t

DEFAULT
SETTING

DETECTION
RESULT USED

FIG.21

IN SYNC

OUT OF
SYNC

DETECTION TIMING CHANGE

DETECTION
PERIOD

n          n+1          n+2

t

AVERAGE SIR

SIR
THRESHOLD
VALUE

DETECTION
PERIOD

n          n+1

t

DEFAULT
SETTING

DETECTION
RESULT
DISCARDED

DEFAULT
SETTING

DEFAULT
SETTING

FIG.22

NUMBER OF
FINGERS

205

2051

QUADRANTAL
COMPENSATION
CIRCUIT

2052

BETWEEN-SYMBOL
AVERAGING
CIRCUIT

2053

DIFFERENTIAL
DETECTION
CIRCUIT

2054

AVERAGING
CIRCUIT

2057

BETWEEN-FINGER
AVERAGING
CIRCUIT

SIR MEASUREMENT
RESULT

SYNCHRONIZATION
DETERMINATION
RESULT

1502

2058

NORMALIZATION
CIRCUIT

SWITCHING CONTROL CIRCUIT

FREQUENCY
OFFSET
DETECTION
RESULT

*  2060

⊗

2055

ABSOLUTE
VALUE
CALCULATION
CIRCUIT

2056

AVERAGING
CIRCUIT

2059

BETWEEN-FINGER
AVERAGING
CIRCUIT

fD
DETECTION
RESULT

2301

DEFAULT
SETTING

PREVIOUS
DETECTED VALUE
HOLDING SECTION

FIG.23

EP 1 233 535 A1

EP 1 233 535 A1

FIG.24

48

SWITCHING CONTROL CIRCUIT 2501

SYNCHRONIZATION DETERMINATION RESULT

NUMBER OF FINGERS

205

QUADRANTAL COMPENSATION CIRCUIT 2051

BETWEEN-SYMBOL AVERAGING CIRCUIT 2052

DIFFERENTIAL DETECTION CIRCUIT 2053

AVERAGING CIRCUIT 2054

* 2060

ABSOLUTE VALUE CALCULATION CIRCUIT 2055

AVERAGING CIRCUIT 2056

BETWEEN-FINGER AVERAGING CIRCUIT 2057

NORMALIZATION CIRCUIT 2058

BETWEEN-FINGER AVERAGING CIRCUIT 2059

SIR MEASUREMENT RESULT

1502

SWITCHING CONTROL CIRCUIT

FREQUENCY OFFSET DETECTION RESULT

fD DETECTION RESULT

2301

PREVIOUS DETECTED VALUE HOLDING SECTION

DEFAULT SETTING

FIG.25

49

EP 1 233 535 A1

<table>
<tr><td colspan="3"><b>INTERNATIONAL SEARCH REPORT</b></td><td>International application No.<br>PCT/JP01/07586</td></tr>
</table>

**A. CLASSIFICATION OF SUBJECT MATTER**
Int.Cl⁷  H04B1/707

According to International Patent Classification (IPC) or to both national classification and IPC

**B. FIELDS SEARCHED**

Minimum documentation searched (classification system followed by classification symbols)
Int.Cl⁷  H04B1/69-1/713, H04J13/00-13/06

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| X | JP 2000-78216 A (Mitsubishi Electric Corporation), 14 March, 2000 (14.03.00), | 1,2 |
| A | Full text; all drawings  (Family: none) | 3-23 |
| X | JP 10-51424 A (NTT Ido Tsushinmo K.K.), 20 February, 1998 (20.02.98), | 1,2 |
| A | Full text; all drawings  (Family: none) | 3-23 |
| A | JP 11-154930 A (NTT Ido Tsushinmo K.K.), 08 June, 1999 (08.06.99), & WO 99/27672 A1  & EP 955741 A1 | 1-23 |
| A | JP 11-284600 A (Japan Radio Co., Ltd.), 15 October, 1999 (15.10.99)  (Family: none) | 1-23 |
| A | JP 2000-78111 A (Fujitsu Limited), 14 March, 2000 (14.03.00)  (Family: none) | 1-23 |
| A | Takayuki NAGAYASU et al, "DS-CDMA Jushin-ki ni okeru Shuuha-suu Offset Hosei Houshiki", 1999nen Denshi Joho Tsuushin Gakkai Sougou Taikai Kouen Ronbunshuu, Tsuushin 1, 08 March, 1999 (08.03.99), page 474 | 1-23 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
22 November, 2001 (22.11.01)

Date of mailing of the international search report
04 December, 2001 (04.12.01)

Name and mailing address of the ISA/
Japanese Patent Office

Facsimile No.

Authorized officer

Telephone No.

Form PCT/ISA/210 (second sheet) (July 1992)

50